# EUROPÄISCHE PATENTSCHRIFT

(11) **EP 1 565 517 B1**
(45) Veröffentlichungstag und Bekanntmachung des Hinweises auf die Patenterteilung: **11.04.2007**
(21) Anmeldenummer: 03780053.9
(22) Anmeldetag: 25.11.2003
(51) Int. Cl.: C08K 3/16, C08K 3/32, C08L 27/06

(54) **SALZ EINER HALOGENHALTIGEN OXYSÄURE GETRÄGERT AUF EINEM TRÄGERMITTEL ALS STABILISIERUNGSZUSAMMENSETZUNG FÜR HALOGENHALTIGE POLYMERE**
SALT OF A HALOGEN-CONTAINING OXYACID CARRIED BY A CARRIER AS A STABILISATION COMPOSITION FOR HALOGEN-CONTAINING POLYMERS
SEL D'UN OXACIDE HALOGENE PORTE PAR UN SUPPORT SERVANT DE COMPOSITION DE STABILISATION DE POLYMERES HALOGENES

(30) Priorität: 26.11.2002 DE 10255155
(43) Veröffentlichungstag der Anmeldung: 24.08.2005
(73) Patentinhaber: Baerlocher GmbH, 85716 Unterschleissheim (DE)
(72) Erfinder: FRISCHKEMUTH, Bernd c/o Shanghai Treffert Co., Ltd, Jiading District, 201801 Shanghai (CN); HELBIG, Christian, 81377 München (DE)
(74) Vertreter: Fiesser, Gerold Michael
(86) Internationale Anmeldenummer: PCT/EP2003/013256
(87) Internationale Veröffentlichungsnummer: WO 2004/048453

(56) Entgegenhaltungen:
- WO-A-02/092686
- WO-A-03/082974
- DE-A- 10 056 880

## Beschreibung

Die vorliegende Erfindung betrifft eine Stabilisatorzusammensetzung für halogenhaltige Polymere und Polymergemische, enthaltend ein Trägermaterial der allgemeinen Formel Ca-ₓAl₂(OH)₂₍ₓ₊₂₎HPO₃ · m H₂O, worin x für eine Zahl von 2 bis 12 und m für eine Zahl von 0 bis 12 steht, und ein Salz einer halogenhaltigen Oxysäure oder ein Gemisch aus zwei oder mehr solcher Salze, wobei mindestens ein Salz einer halogenhaltigen Oxysäure in fein verteilter Form auf dem Trägermaterial vorliegt, ein Verfahren zu deren Herstellung und deren Verwendung.

Halogenhaltige, thermoplastische Harzzusammensetzungen oder daraus hergestellte Formteile, werden durch Einwirkung von Hitze oder Licht abgebaut bzw. zersetzt. Deshalb müssen diesen Harzen Stabilisatoren zugesetzt werden. Für besonders anspruchsvolle Artikel, wie Profile, Platten oder Rohre, werden hierfür üblicherweise anorganische und/oder organische Verbindungen von toxischen Schwermetallen wie Blei, Barium oder Cadmium verwendet. Eine besondere Bedeutung bei der Stabilisierung von z.B. Hart-PVC-Artikeln, wo gute thermische und gute Licht- und Wetterbeständigkeit gefordert werden, hat 2-basisches Bleiphosphit erlangt. So wird beispielsweise in der DD-PS 61 095 die Verwendung von basischem Bleiphosphit als Stabilisator gegen den Abbau von PVC durch Hitze genannt, eine andere Verwendung des basischen Bleiphosphits für PVC-Hartschaum-Mischungen ist in der US-PS 4 797 426 beschrieben.

Da basisches Bleiphosphit ebenso wie andere schwermetallhaltige Stabilisatoren als toxisch eingestuft wird, versucht man Stabilisierungsalternativen zu finden. Es ist eine Vielzahl von Kombinationen aus anorganischen und organischen Verbindungen als Stabilisator für halogenhaltige, thermoplastische Harze bekannt.

In der JP-PS 1 213 865 und in der JP-OS 80 445/80 wird ein Hydrotalcit als Stabilisator vorgeschlagen. Diese Substanz ist Mischungen aus Ca/Zn-Metallseifen, was die Hitzestabilität und die Transparenz betrifft, überlegen. Jedoch kann durch die Verwendung von Hydrotalcit das Problem der Verfärbung des Harzes während der Verarbeitung nicht gelöst werden.

Gemäß JP-OS 80 444/82 wird vorgeschlagen, zur Überwindung dieses Problems Kombinationen aus Hydrotalcit und 1,3-Diketonverbindungen zu verwenden.

Die EP 0 930 332 A2 betrifft Stabilisatorkombinationen enthaltend Aminouracile und mindestens einen weiteren Stoff, ausgewählt aus einer Reihe von Aluminium-, Lithium und Calcium-Aluminium-Verbindungen. Dabei wirkt sich jedoch nachteilig aus, dass die beschriebenen Stabilisatoren im Hinblick auf Hitzestabilität und Anfangsfarbe nicht allen Anforderungen genügen.

Die EP 0 506 831 B1 betrifft basische Calcium-Aluminium-Hydroxy-Phosphite und deren Verwendung als Stabilisatoren für halogenhaltige Polymere. Die in der genannten Druckschrift beschriebenen Stabilisatoren zeigen jedoch nicht in allen geforderten Bereichen die gewünschte Wirkung.

Die DE 100 56 880 A1 und die DE 100 38 721 A1 betreffen Stabilisatorverbindungen für halogenhaltige organische Kunststoffe. Die Herstellung der stabilisierten Produkte erfolgt jeweils, indem eine PVC-Pulvermischung und die in den Druckschriften genannten Rezepturkomponenten 5 Min. lang bei 170°C homogenisiert und plastifiziert werden. Der sich aus den beschriebenen Rezepturen ergebende Anteil an Natriumperchlorat liegt jedoch innerhalb eines Bereiches, der keine ausreichende Wirksamkeit aufweist.

Der Erfindung lag daher Aufgabe zugrunde, neue Stabilisatorzusammensetzungen sowie ein Verfahren zu deren Herstellung zur Verfügung zu stellen, die sich insbesondere als Stabilisatoren für halogenhaltige Polymere eignen, ohne die oben erwähnten Nachteile der bekannten Stabilisatoren aufzuweisen, und insbesondere als nichttoxisch eingestuft werden. Weiterhin lag der Erfindung die Aufgabe zugrunde, Stabilisatorzusammensetzungen zur Verfügung zu stellen, welche die Formulierungsfreiheit des Anwenders dahingehend erweitern, dass er auf die gemäß Stand der Technik erforderlichen Zusätze wie Zinksalze oder Aminouracile verzichten kann ohne eine deutliche Ergebnisverschlechterung zu erzielen. Insbesondere lag der vorliegenden Erfindung die Aufgabe zugrunde, neue Stabilisatorzusammensetzungen sowie ein Verfahren zu deren Herstellung zur Verfügung zu stellen, die sich insbesondere als Stabilisatoren für PVC-Weich, PVC-Part, PVC-Hartschaum (Freischaum, Celukaschaum) eignen.

Es wurde nun gefunden, dass Calcium-Aluminium-Hydrogenphosphite, mit einem fein verteilten Salz einer halogenhaltigen Oxysäure, insbesondere mit einem Perchloratsalz, beaufschlagt sind, ausgezeichnete stabilisierende Eigenschaften für halogenhaltige Polymere aufweisen.

Die der Erfindung zugrundeliegenden Aufgaben werden daher durch Stabilisatorzusammensetzungen und Verfahren zu deren Herstellung gelöst, wie Sie im Rahmen des nachfolgenden Textes näher erläutert werden.

Gegenstand der vorliegenden Erfindung ist daher eine Stabilisatorzusammensetzung für halogenhaltige Polymere, enthaltend ein Trägermaterial der allgemeinen Formel (I) Ca-ₓAl₂(OH)₂₍ₓ₊₂₎HPO₃ · m H₂O (I), worin x für eine Zahl von 2 bis 12 und m für eine Zahl von 0 bis 12 steht, und ein Salz einer halogenhaltigen Oxysäure oder ein Gemisch aus zwei oder mehr solcher Salze, wobei mindestens ein Salz einer halogenhaltigen Oxysäure in fein verteilter Form auf dem Trägermaterial vorliegt.

Stabilisatorzusammensetzungen gemäß der vorliegenden Erfindung weisen mindestens ein Trägermaterial auf, wobei als Trägermaterial Calcium-Aluminium-Hydroxy-Phosphite der allgemeinen Formel I CaₓAl₂(OH)₂₍ₓ₊₂₎HPO₃ · m H₂O (I), worin x für eine Zahl von 2 bis 8 und m für eine Zahl von 0 bis 12 steht, eingesetzt werden.

Unter einer "Stabilisatorzusammensetzung" wird im Rahmen der vorliegenden Erfindung eine Zusammensetzung verstanden, die zur Stabilisierung halogenhaltiger Polymerer eingesetzt werden kann. Zur Erzielung dieses Stabilisierungseffekts wird eine erfindungsgemäße Stabilisatorzusammensetzung in der Regel mit einem zur Stabilisierung vorgesehenen, halogenhaltigen Polymeren vermischt und anschließend verarbeitet. Es ist jedoch ebenso möglich eine erfindungsgemäße Stabilisatorzusammensetzung dem zu stabilisierenden, halogenhaltigen Polymeren während der Verarbeitung beizumischen.

Unter dem Begriff "Trägermaterial" wird dabei ein Material verstanden, das zumindest oberflächlich eine vom Trägermaterial verschiedene Verbindung aufweisen kann, die in fein verteilter Form auf dem Trägermaterial vorliegt. Der Begriff "auf dem Trägermaterial" ist dabei derart auszulegen, dass zumindest ein überwiegender Teil der auf dem Trägermaterial vorliegende Verbindung durch Wechselwirkungen zwischen Trägermaterial und der Verbindung fest auf dem Trägermaterial anhaftet. Die Wechselwirkungen können dabei im wesentlichen beliebig sein, so können beispielsweise ionische, elektrostatische, kovalente oder Van der Waals Kräfte oder zwei oder mehr dieser Wechselwirkungen gleichzeitig für eine Anhaftung auf dem Trägermaterial sorgen.

In der obigen Formel I steht x vorzugsweise für eine Zahl von 3 bis 6 und m bedeutet vorzugsweise für eine Zahl von 2 bis 4. Untersuchungen mittels Röntgenbeugung haben gezeigt, dass die erfindungsgemäß als Trägermaterialien eingesetzten Verbindungen hinsichtlich ihrer Kristallstruktur nicht dem Hydrotalcit-Typ angehören.

Überraschenderweise hat sich gezeigt, dass die erfindungsgemäßen Zusammensetzungen mit Calcium-Aluminium-Hydrogen-Phosphiten und Salzen halogenhaltiger Oxysäuren halogenhaltigen, thermoplastischen Harzen und den daraus hergestellten Formteilen vergleichbare Hitzestabilitäten wie basische Bleiphosphite verleihen. Die erfindungsgemäßen Verbindungen verhindern Verfärbungen bei der Herstellung von z.B. Hart-PVC-Formteilen, auch die Farbhaltung und die Bewitterungsstabilität der mit den erfindungsgemäßen Verbindungen stabilisierten Formteile ist den mit toxischen Schwermetallverbindungen stabilisierten Produkten gleichwertig.

Dabei hat sich auch gezeigt, dass mit den erfindungsgemäßen Zusammensetzungen auch in Abwesenheit von häufig eingesetzten Costabilisatoren wie Zinksalzen oder Aminouracilen ausgezeichnete Ergebnisse erzielen lassen. Die vorliegende Erfindung betrifft daher sowohl Zusammensetzungen, die solche Costabilisatoren enthalten können als auch Zusammensetzungen, die frei von Zinksalzen oder frei von Aminouracilen oder frei von Zinksalzen und Aminouracilen sind.

Zur Herstellung der erfindungsgemäß als Trägermaterialen eingesetzten Calcium-Aluminium-Hydroxy-Phosphite werden beispielsweise Mischungen aus Calciumhydroxid und/oder -oxid, Aluminiumhydroxid und Natriumhydroxid oder aus Calciumhydroxid und/oder -oxid und Natriumaluminat mit phosphoriger Säure in zur Herstellung der erwünschten Verbindungen entsprechenden Mengen in wässrigem Medium umsetzt und das Reaktionsprodukt in an sich bekannter Weise abgetrennt und gewonnen.

Das aus der oben beschriebenen Umsetzung direkt anfallende Reaktionsprodukt kann nach bekannten Verfahren vom wäßrigen Reaktionsmedium abgetrennt werden, vorzugsweise durch Filtration. Die Aufarbeitung des abgetrennten Reaktionsprodukts erfolgt ebenfalls in an sich bekannter Weise, beispielsweise durch Waschen des Filterkuchens mit Wasser und Trocknen des gewaschenen Rückstands bei Temperaturen von beispielsweise 60-130°C vorzugsweise bei 90-120°C.

Für die Umsetzung kann sowohl ein feinteiliges, aktives Aluminiumhydroxid in Kombination mit Natriumhydroxid, als auch ein Natriumaluminat eingesetzt werden. Calcium kann in Form von feinteiligem Calciumoxid oder -hydroxid oder Mischungen daraus verwendet werden. Die phosphorige Säure kann in unterschiedlich konzentrierter Form eingesetzt werden.

Die Umsetzungstemperaturen liegen vorzugsweise zwischen etwa 50 und 100 °C, weiter vorzugsweise zwischen etwa 60 und 85 °C. Katalysatoren oder Beschleuniger sind nicht erforderlich. Bei den erfindungsgemäßen Verbindungen kann das Kristallwasser ganz oder teilweise durch thermische Behandlung entfernt werden. Bei ihrer Anwendung als Stabilisatoren spalten die erfindungsgemäß eingesetzten, getrockneten Calcium-Aluminium-Hydroxy Phosphite bei den beispielsweise für Hart-PVC üblichen Verarbeitungstemperaturen von 160-200° C kein Wasser ab, so dass in den Formteilen keine störende Blasenbildung auftritt.

Zur Verbesserung ihrer Dispergierbarkeit in halogenhaltigen thermoplastischen Harzen können die erfindungsgemäßen Verbindungen in bekannter Weise mit oberflächenaktiven Mitteln gecoatet werden.

Eine erfindungsgemäße Stabilisatorzusammensetzung weist mindestens zwei Bestandteile auf. Neben einem Trägermaterial als erstem Bestandteil enthält eine erfindungsgemäße Stabilisatorzusammensetzung noch mindestens ein Salz einer halogenhaltigen Oxysäure.

Vorzugsweise enthält eine erfindungsgemäße Stabilisatorzusammensetzung mindestens ein anorganisches oder ein organisches Salz der Perchlorsäure.

Beispiele für geeignete anorganische Perchlorate sind diejenigen der allgemeinen Formel M(ClO₄)ₖ, wobei M für Li, Na, K, Mg, Ca, Sr, Zn, Al, La oder Ce steht.

Als organische Perchlorate eignen sich insbesondere die Oniumsalze von Perchloraten, wie sie nachfolgend beschrieben werden. Als "Oniumsalz" wird im Rahmen des vorliegenden Textes eine Verbindung bezeichnet, die ein Ammonium-, Sulfonium- oder Phosphoniumsalz darstellt. Bei einem "Oniumsalz" gemäß der handelt es sich um ein organisches Oniumsalz. Dies bedeutet, dass die Ammonium-, Sulfonium- oder Phosphoniumgruppe des Oniumsalzes mindestens einen organischen Rest trägt. Ein Oniumsalz kann dabei, je nach Art der Oniumgruppe, 1, 2, 3 oder 4 organische Reste tragen. Die organischen Reste können dabei beispielsweise über eine C-X-Verknüpfung, wobei X für S, N oder P steht, mit dem Oniumrest verbunden sein. Es ist jedoch ebenso möglich, dass die organischen Reste über ein weiteres Heteroatom, beispielsweise ein O-Atom, mit dem Oniumrest verbunden sind.

Ein im Rahmen der vorliegenden Erfindung einsetzbares Oniumperchlorat weist mindestens ein positiv geladenes N-, P- oder S-Atom oder zwei oder mehr solcher positiv geladenen N-, P- oder S-Atome oder Gemische aus zwei oder mehr der genannten, positiv geladenen Atomtypen auf.

Im Rahmen der vorliegenden Erfindung werden als Oniumperchlorate Verbindungen eingesetzt, die am N, S oder P-Atom mindestens einen organischen Rest und höchstens die maximal mögliche Zahl an organischen Resten tragen. Wenn ein erfindungsgemäß einsetzbares Oniumperchlorat weniger organische Reste trägt, als zur Ausbildung eines positiv geladenen Oniumions notwendig sind, so wird die positive Ladung in üblicher, dem Fachmann bekannter Weise durch Protonierung mittel einer geeigneten Säure erzeugt, so dass das entsprechende Oniumperchlorat in diesem Fall neben einem organischen Rest noch mindestens ein Proton trägt.

Es können erfindungsgemäß daher also Verbindungen als Oniumperchlorate eingesetzt werden, die aufgrund von Protonierungsreaktionen eine positive Ladung aufweisen. Es ist jedoch ebenso möglich im Rahmen der erfindungsgemäßen Stabilisatorkombinationen Oniumperchlorate einzusetzen, die aufgrund einer Peralkylierungsreaktion eine positive Ladung aufweisen. Beispiele für derartige Verbindungen sind Tetraalkylammonium-, Trialkylsulfonium- oder Tetraalkylphosphoniumperchlorate. Es ist jedoch im Rahmen der vorliegenden Erfindung ebenso vorgesehen, dass ein erfindungsgemäß einsetzbares peralkyliertes Oniumperchlorat einen Aryl-, Alkaryl-, Cycloalkyl-, Alkenyl-, Alkinyl- oder Cycloalkenylrest aufweist. Es ist erfindungsgemäß ebenso möglich und vorgesehen, dass ein im Rahmen einer erfindungsgemäßen Stabilisatorzusammensetzung einsetzbares Oniumsalz zwei oder gegebenenfalls mehr unterschiedliche Substituententypen aufweist, beispielsweise einen Alkyl- und einen Cycloalkylrest oder einen Alkyl- und einen Arylrest.

Es ist im Rahmen der vorliegenden Erfindung ebenso möglich und vorgesehen, dass ein im Rahmen einer erfindungsgemäßen Stabilisatorzusammensetzung einsetzbares Oniumsalz Substituenten aufweist, die ihrerseits durch eine oder mehrere funktionelle Gruppen substituiert sind. Als "funktionelle Gruppen" werden dabei Gruppen bezeichnet, welche die Wirkungen der Stabilisatorzusammensetzung verbessern oder zumindest nicht oder nur unwesentlich verschlechtern. Entsprechende funktionelle Gruppen können beispielsweise NH-Gruppen, NH₂-Gruppen, OH-Gruppen, SH-Gruppen, Estergruppen, Ethergruppen, Thioethergruppen, Isocyanuratgruppen oder Ketogruppen oder Gemische aus zwei oder mehr davon.

Als Phosphoniumperchlorate sind im Rahmen der vorliegenden Erfindung grundsätzlich alle Verbindungen einsetzbar, die durch entsprechende Umsetzung geeigneter Reaktanden zu einem Phosphoniumperchlorat führen. Dabei können erfindungsgemäß einsetzbare Phosphoniumperchlorate beispielsweise durch entsprechende Umsetzung von Tetraalkyl-, Tetracycloaklkyl- oder Tetraarylphosphorhalogeniden erhalten werden. Geeignete Phosphoniumperchlorate leiten sich daher beispielsweise von Tetraalkylphosphorsalzen wie Tetraethylphosphoniumbromid, Tetra-n-propylphosphoniumbromid, Tetra-n-butylphosphoniumbromid, Tetraisobutylphosphoniumbromid, Tetra-n-pentylphosphoniumbromid, Tetra-n-hexylphosphoniumbromid und dergleichen Tetraalkylphosphorsalzen ab. Weiterhin eignen sich grundsätzlich zum Einsatz im Rahmen der erfindungsgemäßen Stabilisatorzusammensetzungen Phosphoniumperchlorate, die sich beispielsweise von Tetracycloalkylphosphorsalzen oder Tetraarylphosphorsalzen ableiten. Geeignete Phosphoniumperchlorate basieren daher beispielsweise auf Tetracycloalkyl- oder Tetraarylphosphorsalzen wie Tetracyclohexylphosphoniumbromid oder Tetraphenylphosphoniumbromid und dergleichen Tetracycloalkyl- oder Tetraarylphosphorsalzen. Die oben genannten Verbindungen können im Rahmen der vorliegenden Erfindung unsubstituiert sein, sie können jedoch auch einen oder mehrere der oben genannten Substituenten aufweisen, sofern diese Substituenten im Rahmen der Stabilisatorzusammensetzung keine nachteiligen Wirkungen aufweisen und den Einsatzzweck der Stabilisatorzusammensetzung nicht nachteilig beeinflussen.

Ebenfalls im Rahmen der vorliegenden Erfindung einsetzbar sind organische Phosphoniumperchlorate, die an einem Phosphoratom unterschiedliche Typen organischer Substituenten tragen, die gegebenenfalls unterschiedlich substituiert sein können.

Im Rahmen einer bevorzugten Ausführungsform der vorliegenden Erfindung werden als Phosphoniumperchlorate Tetra-n-butylphosphoniumperchlorat oder Triphenylbenzylphosphoniumperchlorat eingesetzt.

Als Sulfoniumperchlorate sind im Rahmen der vorliegenden Erfindung grundsätzlich alle Verbindungen einsetzbar, die durch entsprechende Umsetzung geeigneter Reaktanden zu einem Sulfoniumperchlorat führen. Dabei können erfindungsgemäß einsetzbare Sulfoniumperchlorate beispielsweise durch entsprechende Umsetzung von Sulfiden wie Alkylmonosulfiden, Alkyldisulfiden, Dialkylsulfiden oder Poly(alkylsulfid)en erhalten werden. Geeignete Sulfoniumperchlorate leiten sich daher beispielsweise von Dialkylsulfiden wie Ethylbenzylsulfid, Allylbenzylsulfid oder Alkyldisulfiden wie Hexandisulfid, Heptandisulfid, Octändisulfid und dergleichen Alkyldisulfiden ab. Weiterhin eignen sich grundsätzlich zum Einsatz im Rahmen der erfindungsgemäßen Stabilisatorzusammensetzungen Sulfoniumperchlorate, die sich beispielsweise von Tricycloalkylsulfoniumsalzen oder Triarylsulfoniumsalzen ableiten. Geeignete Sulfoniumperchlorate basieren daher beispielsweise auf Tricycloalkyl- oder Triarylsulfoniumsalzen wie Tricyclohexylsulfoniumbromid oder Triphenylsulfoniumbromid und dergleichen Tricycloalkyl- oder Triarylsulfoniumsalzen. Ebenfalls geeignet sind Trialkyl-, Triaryl- oder Tricycloalkylsulfoxoniumsalze wie Trimethylsulfoxoniumperchlorat. Die oben genannten Verbindungen können im Rahmen der vorliegenden Erfindung unsubstituiert sein, sie können jedoch auch einen oder mehrere der oben genannten Substituenten aufweisen, sofern diese Substituenten im Rahmen der Stabilisatorzusammensetzung keine nachteiligen Wirkungen aufweisen und den Einsatzzweck der Stabilisatorzusammensetzung nicht nachteilig beeinflussen.

Ebenfalls im Rahmen der vorliegenden Erfindung einsetzbar sind organische Sulfoniumperchlorate, die an einem Schwefelatom unterschiedliche Typen organischer Substituenten tragen, die gegebenenfalls unterschiedlich substituiert sein können.

Im Rahmen einer bevorzugten Ausführungsform der vorliegenden Erfindung wird als Sulfoniumperchlorat Trimethylsulfoxoniumperchlorat eingesetzt.

Als Ammoniumperchlorate sind im Rahmen der vorliegenden Erfindung grundsätzlich alle Verbindungen einsetzbar, die durch entsprechende Umsetzung geeigneter Reaktanden zu einem Ammoniumperchlorat führen. Dabei können erfindungsgemäß einsetzbare Ammoniumperchlorate beispielsweise durch entsprechende Umsetzung von Aminen oder Amiden wie Alkylmonoaminen, Alkylendiaminen, Alkylpolyaminen, sekundären oder tertiären Aminen erhalten werden. Geeignete Ammoniumperchlorate leiten sich daher beispielsweise von primären Mono- oder Polyaminoverbindungen mit 2 bis etwa 40, beispielsweise 6 bis etwa 20 C-Atomen ab. Beispielsweise sind dies Ethylamin, n-Propylamin, i-Propylamin, n-Butylamin, sek.-Butylamin, tert.-Butylamin, substituierte Amine mit 2 bis etwa 20 C-Atomen wie 2-(N,N-Dimethylamino)-1-aminoethan. Geeignete Diamine weisen beispielsweise zwei primäre, zwei sekundäre zwei tertiäre oder eine primäre und eine sekundäre oder eine primäre und eine tertiäre oder eine sekundäre und eine tertiäre Aminogruppe auf. Beispiele hierfür sind Diaminoethan, die isomeren Diaminopropane, die isomeren Diaminobutane, die isomeren Diaminohexane, Piperazin, 2,5-Dimethylpiperazin, Amino-3-aminomethyl-3,5,5-trimethylcyclohexan (Isophorondiamin, IPDA), 4,4'-Diaminodicyclohexylmethan, 1,4-Diaminocyclohexan, Aminoethylethanolamin, Hydrazin, Hydrazinhydrat oder Triamine wie die Diethylentriamin oder 1,8-Diamino-4-aminomethyloctan oder tertiäre Amine wie Triethylamin, Tributylamin, Trihexylamin, Triheptylamin, Trioctylamin, Dimethylbenzylamin, N-Ethyl-, N-Methyl-, N-Cyclohexylmorpholin, Dimethylcyclohexylamin, Dimorpholinodiethylether, 1,4-Diazabicyclo[2,2,2]octan, 1-Azabicyclo[3,3,0]octan, N,N,N',N'-Tetramethylethylendiamin, N,N,N',N'-Tetramethylbutandiamin, N,N,N',N'-Tetramethylhexandiamin-1,6, Pentamethyldiethylentriamin, Tetramethyldiaminoethylether, Bis-(dimethylaminopropyl)-harnstoff, N,N'-Dimethylpiperazin, 1,2-Dimethylimidazol oder Di-(4-N,N-dimethylaminocyclohexyl)-methan.

Besonders geeignet und im Rahmen der vorliegenden Erfindung bevorzugt sind aliphatische Aminoalkohole mit 2 bis etwa 40, vorzugsweise 6 bis etwa 20 C-Atomen, beispielsweise Triethanolamin, Tripropanolamin, Triisopropanolamin, Tributanolamin, Tri-tert-butanolamin, Tripentanolamin, 1-Amino-3,3-dimethyl-pentan-5-ol, 2-Aminohexan-2',2"-diethanolamin, 1-Amino-2,5-dimethylcyclohexan-4-ol- 2-Aminopropanol, 2-Aminobutanol, 3-Aminopropanol, 1-Amino-2-propanol, 2-Amino-2-methyl-1-propanol, 5-Aminopentanol, 3-Aminomethyl-3,5,5-trimethylcyclohexanol, 1-Amino-1-cyclopentan-methanol, 2-Amino-2-ethyl-1,3-propandiol, 2-(Dimethylaminoethoxy)-ethanol, aromatisch-aliphatische oder aromatischcycloaliphatische Aminoalkohole mit 6 bis etwa 20 C-Atomen, wobei als aromatische Strukturen heterocyclische oder isocyclische Ringsysteme wie Naphthalin- oder insbesondere Benzolderivate wie 2-Aminobenzylalkohol, 3-(Hydroxymethyl)anilin, 2-Amino-3-phenyl-1-propanol, 2-Amino-1-phenylethanol, 2-Phenylglycinol oder 2-Amino-1-phenyl-1,3-propandiol sowie Gemische aus zwei oder mehr solcher Verbindungen eingesetzt werden.

Im Rahmen einer weiteren Ausführungsform der vorliegenden Erfindung werden als Ammoniumperchlorate die Perchlorate heterocyclischer Verbindungen eingesetzt, die über ein cyclisches, Aminogruppen aufweisendes Ringsystem verfügen.

Beispielsweise werden dabei die Perchlorate heterocyclischer Aminoalkohole eingesetzt, die mindestens 2, vorzugsweise mindestens 3 Aminogruppen im Ring aufweisen. Als zentraler Ringbestandteil der erfindungsgemäß einsetzbaren Ammoniumperchlorate besonders geeignet sind hierbei die Trimerisierungsprodukte von Isocyanaten.

Geeignet sind dabei beispielsweise hydroxylgruppenhaltige Isocyanurate der allgemeinen Formel II 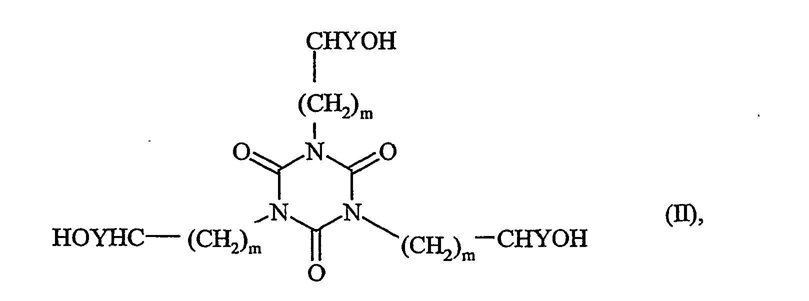 worin die Gruppen Y und die Indices m jeweils gleich oder verschieden sind und m für eine ganze Zahl von 0 bis 20 und Y für ein Wasserstoffatom oder eine lineare oder verzweigte, gesättigte oder ungesättigte Alkylgruppe mit 1 bis etwa 10 C-Atomen steht. Besonders bevorzugt ist im Rahmen der vorliegenden Erfindung der Einsatz von Tris(hydroxyethyl)isocyanurat (THEIC) als Bestandteil der erfindungsgemäßen Stabilisatorzusammensetzungen.

Ebenfalls als Ammoniumperchlorate geeignet sind beispielsweise Verbindungen, in denen die Aminogruppe an einem substituierten aromatischen oder heteroaromatischen System gebunden vorliegt, beispielsweise Aminobenzoesäure, Aminosalicylsäure oder Aminopyridincarbonsäure und deren geeignete Derivate.

Im Rahmen einer bevorzugten Ausführungsform der vorliegenden Erfindung werden als Ammoniumperchlorate 2-Ethylcarboxypyridiniumperchlorat, Formamidiniumperchlorat, Tetra-n-butylphosphoniumperchlorat, Trimethylsulfoxoniumperchlorat, das Perchloratsalz des Trishydroxyethylisocyanurats, das Perchloratsalz des 2-(Diethylamino)-ethanols, des Triethanolamins oder des Triisopropanolamins, N-(2-Hydroxyethyl)-morpholiniumperchlorat oder Trioctylammoniumperchlorat oder Gemische aus zwei oder mehr davon eingesetzt.

Eine erfindungsgemäße Stabilisatorzusammensetzung kann im Rahmen der vorliegenden Erfindung beispielsweise nur eines der obengenannten Oniumperchlorate enthalten. Es ist im Rahmen der vorliegenden Erfindung ebenso möglich und auch vorgesehen, dass eine erfindungsgemäße Stabilisatorzusammensetzung ein Gemisch aus zwei oder mehr der obengenannten Oniumperchlorate enthält. Es kann sich dabei um ein Gemisch von zwei oder mehr unterschiedlichen Typen von Oniumperchloraten, d. h., beispielsweise um ein Gemisch von Ammoniumperchloraten und Sulfoniumperchloraten oder Ammoniumperchloraten und Phosphoniumperchloraten oder Sulfoniumperchloraten und Phosphoniumperchloraten oder Ammoniumperchloraten und Sulfoniumperchloraten und Phosphoniumperchloraten handeln. Es ist im Rahmen der Erfindung ebenso möglich, dass eine erfindungsgemäße Stabilisatorzusammensetzung ein Gemisch aus zwei oder mehr Oniumperchloraten eines Typs, d. h. ein Gemisch aus zwei oder mehr Ammoniumperchloraten und ein Gemisch aus zwei oder mehr Sulfoniumperchloraten und ein Gemisch aus zwei oder mehr Phosphoniumperchloraten enthält.

Beispielsweise kann eine erfindungsgemäße Stabilisatorzusammensetzung im Rahmen der vorliegenden Erfindung nur ein Salz einer halogenhaltigen Oxysäure enthalten. Es ist jedoch im Rahmen der vorliegenden Erfindung ebenso möglich und vorgesehen, dass eine erfindungsgemäße Stabilisatorzusammensetzung ein Gemisch aus zwei oder mehr Salzen halogenhaltiger Oxysäuren enthält. Im Rahmen einer bevorzugten Ausführungsform der vorliegenden Erfindung enthält eine erfindungsgemäße Stabilisatorzusammensetzung mindestens Natriumperchlorat.

Das Salz einer halogenhaltigen Oxysäure oder ein Gemisch aus zwei oder mehr solcher Salze liegt erfindungsgemäß in fein verteilter Form auf dem Trägermaterial vor. Unter dem Begriff "fein verteilt" ist dabei der Befund zu verstehen, dass diskrete Partikel des auf dem Trägermaterial vorliegenden Salzes einer halogenhaltigen Oxysäure oder eines Gemisch aus zwei oder mehr solcher Salze, sofern solche diskreten Partikel überhaupt vorliegend oder erkennbar sind, eine durchschnittliche Partikelgröße von 10 µm nicht überschreiten. Vorzugsweise ist der Begriff so auszulegen, dass insgesamt insbesondere für das Salz eine Partikelgröße von 10 µm, insbesondere eine Partikelgröße von 5 µm oder von 1 µm nicht überschritten wird. Zur Bestimmung der Partikelgröße können übliche Methoden wie Licht- oder Elektronenmikroskopie eingesetzt werden.

Wie bereits oben ausgeführt, ist der Begriff "auf dem Trägermaterial" derart auszulegen, dass zumindest ein überwiegender Teil der auf dem Trägermaterial vorliegende Verbindung durch Wechselwirkungen zwischen Trägermaterial und der Verbindung fest auf dem Trägermaterial anhaftet. Die Wechselwirkungen können dabei im wesentlichen beliebig sein, so können beispielsweise ionische, elektrostatische, kovalente oder Van der Waals Kräfte oder zwei oder mehr dieser Wechselwirkungen gleichzeitig für eine Anhaftung auf dem Trägermaterial sorgen.

Im Rahmen einer bevorzugten Ausführungsform der vorliegenden Erfindung enthält eine erfindungsgemäße Stabilisatorzusammensetzung daher ein Gemisch aus Trägermaterial und Salz einer halogenhaltigen Oxysäure, bei dem höchstens 10 Gew.-% mindestens eines Salzes einer halogenhaltigen Oxysäure vom Trägermaterial durch einfache mechanische Separationsverfahren, beispielsweise durch Sieben, abtrennbar sind. Unter einem "einfachen mechanischen Separationsverfahren" wird im Rahmen des vorliegenden Textes ein Trennverfahren verstanden, bei dem im wesentlichen nur bereits vor Durchführung des Trennverfahrens getrennt voneinander vorliegende oder nur schwach aneinander haftende Partikel separiert werden.

Neben einem Salz einer halogenhaltigen Oxysäure oder einem Gemisch aus zwei oder mehr solcher Salze, die in feiner Verteilung auf einem Trägermaterial vorliegen, kann eine erfindungsgemäße Stabilisatorzusammensetzung noch ein Salz einer halogenhaltigen Oxysäure oder ein Gemisch aus zwei oder mehr solcher Salze enthalten, die im Sinne der obigen Definition nicht in feiner Verteilung auf dem Trägermaterial vorliegen.

Dabei können beispielsweise weniger als 10 Gew.-% der Salze der halogenhaltigen Oxysäure oder des Gemischs aus zwei oder mehr solcher Salze, sofern die Salze in Kristallform vorliegen können, Kristallite mit einer Größe von mehr als 30 µm oder mehr als 20 µm oder mehr als 10 µm aufweisen. Daraus folgt, dass mindestens etwa 90 Gew.-% solcher Salze Kristallite mit einer Größe von weniger als 30 µm oder weniger als 20 µm oder weniger als 10 µm aufweisen.

Vorzugsweise liegt die durchschnittliche Partikelgröße im oben genannten Fall innerhalb eines Bereichs von etwa 0,5 bis etwa 30 µm, beispielsweise bei etwa 1 bis etwa 20 µm.

Die Kristallitgrößen von Salzen halogenhaltiger Oxysäuren die in der erfindungsgemäßen Stabilisatorzusammensetzung nicht auf einem Trägermaterial vorliegen, lassen sich, sofern diese Salze Kristallite bilden, grundsätzlich durch beliebige Methoden zur Bestimmung von Partikelgrößen bestimmen. Grundsätzlich geeignet sind beispielsweise Siebverfahren, Sedimentationsverfahren oder Verfahren die auf der Beugung oder Brechung von elektromagnetische Wellen, insbesondere von Licht, beruhen. Darüber hinaus geeignet sind elektronenmikroskopische Verfahren wie die Rasterelektronenmikroskopie oder die Transmissionselektronenmikroskopie.

Der Anteil an Salzen einer halogenhaltigen Oxysäure oder eines Gemischs aus zwei oder mehr halogenhaltigen Oxysäuren an der erfindungsgemäße Stabilisatorzusammensetzung beträgt insgesamt etwa 0,1 bis etwa 30 Gew.-%, insbesondere etwa 0,5 bis etwa 20 Gew.-%. Beispiele für Gehalte an Salzen einer halogenhaltigen Oxysäure oder eines Gemischs aus zwei oder mehr derartigen Salzen sind etwa 1 bis etwa 15 Gew.-% oder etwa 2 bis etwa 10 Gew.-%.

Dabei liegen vorzugsweise etwa 0,1 bis etwa 100 Gew.-% der Salze einer halogenhaltigen Oxysäure oder des Gemischs aus zwei oder mehr solcher Salze, beispielsweise etwa 10 bis etwa 99 oder etwa 20 bis etwa 95 oder etwa 40 bis etwa 90 Gew.-%, jeweils bezogen auf die Gesamtmenge an Salzen halogenhaltiger Oxysäuren in der erfindungsgemäßen Stabilisatorzusammensetzung, auf dem Trägermaterial vor.

Das Verhältnis von Salz oder Salzen einer halogenhaltigen Oxysäure zu Trägermaterial kann im wesentlichen innerhalb im Hinblick auf das gewünschte Stabilisierungsergebnis vorgegebener Grenzen beliebig gestaltet werden. Wenn eine erfindungsgemäße Stabilisatorzusammensetzung ausschließlich auf einem Trägermaterial vorliegendes Salz oder ein solches Gemisch von zwei oder mehr Salzen einer halogenhaltigen Oxysäure sofern das Trägermaterial die gewünschte Menge an Salz oder Salzen einer halogenhaltigen Oxysäure im Sinne der obigen Definition aufweisen soll, so sollte das Verhältnis derart gestaltet werden, dass die Menge an Salz oder Salzen einer halogenhaltigen Oxysäure vom Trägermaterial noch aufgenommen werden kann ohne dass getrennt vom Trägermaterial vorliegende Anteile an Salz oder Salzen einer halogenhaltigen Oxysäure vorliegen.

Beispielsweise sollte im Rahmen der vorliegenden Erfindung das Verhältnis von Salz oder Salzen einer halogenhaltigen Oxysäure zu Trägermaterial 1:100 bis 1:1 betragen.

Das Trägermaterial selbst sollte im Rahmen der vorliegenden Erfindung in Partikelform vorliegen und dabei vorzugsweise eine durchschnittliche Partikelgröße von 100 µm nicht überschreiten. Vorzugsweise weist das Trägermaterial eine Partikelgröße von 50 µm oder weniger, insbesondere eine Partikelgröße von 30 µm oder weniger oder von 10 µm oder weniger, auf. Grundsätzlich zur Bestimmung der Partikelgröße geeignet sind dabei beispielsweise Siebverfahren, Sedimentationsverfahren oder Verfahren die auf der Beugung oder Brechung von elektromagnetische Wellen, insbesondere von Licht, beruhen. Besonders geeignet ist dabei die Laserbeugungsmethode. Darüber hinaus geeignet sind elektronenmikroskopische Verfahren wie die Rasterelektronenmikroskopie oder die Transmissionselektronenmikroskopie.

Neben den beiden oben beschriebenen Hauptbestandteilen kann eine erfindungsgemäße Stabilisatorzusammensetzung noch einen oder mehrere Zusatzstoffe aufweisen.

Besonders geeignete Zusatzstoffe sind beispielsweise Treibmittel. Als Treibmittel eignen sich beispielsweise organische Azo- und Hydrazoverbindungen, Tetrazole, Oxazine, Isatosäureanhydrid, Salze der Citronensäure, beispielsweise Ammoniumcitrat, sowie Soda und Natriumbicarbonat. Besonders geeignet sind beispielsweise Ammoniumcitrat, Azodicarbonamid oder Natriumbicarbonat oder Gemische aus zwei oder mehr davon. Ebenfalls geeignet sind physikalische Treibmittel wie Flüssigkeiten, die bei entsprechender Temperaturerhöhung in den gasförmigen Zustand übergehen oder Gase, beispielsweise Wasser, CO₂ (superkritisch), Luft oder Inertgase wie Stickstoff, Helium, Argon und dergleichen.

Im Rahmen einer bevorzugten Ausführungsform der vorliegenden Erfindung enthält eine erfindungsgemäße Stabilisatorzusammensetzung mindestens ein Treibmittel.

Der Anteil an Treibmittel in einer erfindungsgemäßen Stabilisatorzusammensetzung beträgt vorzugsweise etwa 0,01 bis etwa 20 Gew.-%, beispielsweise etwa 0,1 bis etwa 10 oder etwa 0,5 bis etwa 5 Gew.-%.

Weiterhin als Zusatzstoffe im Rahmen der vorliegenden Erfindung geeignet sind beispielsweise Aminoalkohole. Als Aminoalkohole sind im Rahmen der vorliegende Erfindung grundsätzlich alle Verbindungen geeignet, die mindestens eine OH-Gruppe und eine primäre, sekundäre oder tertiäre Aminogruppe oder eine Kombination aus zwei oder mehr der genannten Aminogruppen aufweisen. Grundsätzlich sind im Rahmen der vorliegende Erfindung sowohl feste als auch flüssige Aminoalkohole als Bestandteil der erfindungsgemäßen Stabilisatorzusammensetzungen geeignet. Im Rahmen der vorliegenden Erfindung wird der Anteil an flüssigen Aminoalkoholen jedoch beispielsweise so gewählt, dass die gesamte Stabilisatorzusammensetzung im wesentlichen in fester Form vorliegt.

Im Rahmen der vorliegenden Erfindung einsetzbare Aminoalkohole weisen im Rahmen einer bevorzugten Ausführungsform der vorliegenden Erfindung einen Schmelzpunkt von mehr als etwa 30 °C, insbesondere mehr als etwa 50 °C auf. Geeignete Aminoalkohole sind beispielsweise Mono- oder Polyhydroxyverbindungen die auf linearen oder verzweigten, gesättigten oder ungesättigten aliphatischen Mono- oder Polyaminen aufbauen.

Hierzu geeignet sind beispielsweise OH-Gruppen tragende Derivate primärer Mono- oder Polyaminoverbindungen mit 2 bis etwa 40, beispielsweise 6 bis etwa 20 C-Atomen. Beispielsweise sind dies entsprechende OH-Gruppen tragende Derivate von Ethylamin, n-Propylamin, i-Propylamin, n-Propylamin, sek.-Propylamin, tert.-Butylamin, 1-Aminoisobutan, substituierten Aminen mit zwei bis etwa 20 C-Atomen wie 2-(N,N-Dimethylamino)-1-aminoethan. Geeignete OH-Gruppen tragende Derivate von Diaminen sind beispielsweise solche, die auf Diaminen mit einem Molekulargewicht von etwa 32 bis etwa 200 g/mol aufbauen, wobei die entsprechenden Diamine mindestens zwei primäre, zwei sekundäre oder eine primäre und eine sekundäre Aminogruppe aufweisen. Beispiele hierfür sind Diaminoethan, die isomeren Diaminopropane, die isomeren Diaminobutane, die isomeren Diaminohexane, Piperazin, 2,5-Dimethylpiperazin, Amino-3-aminomethyl-3,5,5-trimethylcyclohexan (Isophorondiamin, IPDA), 4,4'-Diaminodicyclohexylmethan, 1,4-Diaminocyclohexan, Aminoethylethanolamin, Hydrazin, Hydrazinhydrat oder Triamine wie die Diethylentriamin oder 1,8-Diamino-4-aminomethyloctan. Triethylamin, Tributylamin, Dimethylbenzylamin, N-Ethyl-, N-Methyl-, N-Cyclohexylmorpholin, Dimethylcyclohexylamin, Dimorpholinodiethylether, 1,4-Diazabicyclo[2,2,2]octan, 1-Azabicyclo[3,3,0]octan, N,N,N',N'-Tetramethylethylendiamin, N,N,N',N'-Tetramethylbutandiamin, N,N,N',N'-Tetramethylhexandiamin-1,6, Pentamethyldiethylentriamin, Tetramethyldiaminoethylether, Bis-(dimethylaminopropyl)-harnstoff, N,N'-Dimethylpiperazin, 1,2-Dimethylimidazol oder Di-(4-N,N-dimethylaminocyclohexyl)-methan.

Besonders geeignet sind aliphatische Aminoalkohole mit 2 bis etwa 40, vorzugsweise 6 bis etwa 20 C-Atomen, beispielsweise 1-Amino-3,3-dimethyl-pentan-5-ol, 2-Aminohexan-2',2"-diethanolamin, 1-Amino-2,5-dimethylcyclohexan-4-ol- 2-Aminopropanol, 2-Aminobutanol, 3-Aminopropanol, 1-Amino-2-propanol, 2-Amino-2-methyl-1-propanol, 5-Aminopentanol, 3-Aminomethyl-3,5,5-trimethylcyclohexanol, 1-Amino-1-cyclopentan-methanol, 2-Amino-2-ethyl-1,3-propandiol, 2-(Dimethylaminoethoxy)-ethanol, aromatisch-aliphatische oder aromatisch-cycloaliphatische Aminoalkohole mit 6 bis etwa 20 C-Atomen, wobei als aromatische Strukturen heterocyclische oder isocyclische Ringsysteme wie Naphthalin- oder insbesondere Benzolderivate wie 2-Aminobenzylalkohol, 3-(Hydroxymethyl)anilin, 2-Amino-3-phenyl-1-propanol, 2-Amino-1-phenylethanol, 2-Phenylglycinol oder 2-Amino-1-phenyl-1,3-propandiol sowie Gemische aus zwei oder mehr solcher Verbindungen in Betracht kommen.

Im Rahmen einer besonders bevorzugten Ausführungsform der vorliegenden Erfindung werden als Aminoalkohole heterocyclische Verbindungen eingesetzt, die über ein cyclisches, Aminogruppen aufweisendes Ringsystem verfügen, wobei die OH-Gruppen entweder direkt am Ring oder vorzugsweise über Spacer mit diesem verbunden sind.

Im Rahmen einer besonders bevorzugten Ausführungsform der vorliegenden Erfindung werden dabei heterocyclische Aminoalkohole eingesetzt, die mindestens 2, vorzugsweise mindestens 3 Aminogruppen im Ring aufweisen. Als zentraler Ringbestandteil der erfindungsgemäß einsetzbaren Aminoalkohole besonders geeignet sind hierbei die Trimerisierungsprodukte von Isocyanaten.

Besonders bevorzugt werden dabei hydroxylgruppenhaltige Isocyanurate der bereits oben genannten allgemeinen Formel II.

Besonders bevorzugt ist im Rahmen der vorliegenden Erfindung der Einsatz von Tris(hydroxyethyl)isocyanurat (THEIC) als Bestandteil der erfindungsgemäßen Stabilisatorzusammensetzungen.

Eine erfindungsgemäße Stabilisatorzusammensetzung kann beispielsweise nur einen Aminoalkohol enthalten. Es ist im Rahmen der vorliegenden Erfindung jedoch ebenso vorgesehen, dass eine erfindungsgemäße Stabilisatorzusammensetzung ein Gemisch aus zwei oder mehr verschiedenen Aminoalkoholen enthält.

Ebenfalls als Zusatzstoffe im Rahmen der vorliegenden Erfindung geeignet sind Verbindungen mit einem Strukturelement der allgemeinen Formel III 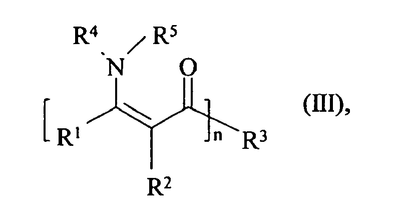 worin n für eine Zahl von 1 bis 100.000, die Reste R⁴, R⁵, R¹ und R² jeweils unabhängig voneinander für Wasserstoff, einen gegebenenfalls substituierten linearen oder verzweigten, gesättigten oder ungesättigten aliphatischen Alkylrest mit 1 bis 44 C-Atomen, einen gegebenenfalls substituierten gesättigten oder ungesättigten Cycloalkylrest mit 6 bis 44 C-Atomen oder einen gegebenenfalls substituierten Arylrest mit 6 bis 44 C-Atomen oder einen gegebenenfalls substituierten Aralkylrest mit 7 bis 44 C-Atomen stehen oder der Rest R¹ für einen gegebenenfalls substituierten Acylrest mit 2 bis 44 C-Atomen steht oder die Reste R¹ und R² zu einem aromatischen oder heterocyclischen System verbunden sind und worin der Rest R³ für Wasserstoff, einen gegebenenfalls substituierten, linearen oder verzweigten, gesättigten oder ungesättigten aliphatischen Alkyl- oder Alkylenrest oder Oxyalkyl- oder Oxyalkylenrest oder Mercaptoalkyl- oder Mercaptoalkylenrest oder Aminoalkyl- oder Aminoalkylenrest mit 1 bis 44 C-Atomen, einen gegebenenfalls substituierten gesättigten oder ungesättigten Cycloalkyl- oder Cycloalkylenrest oder Oxycycloalkyl- oder Oxycycloalkylenrest oder Mercaptocycloalkyl- oder Mercaptocycloalkylenrest oder Aminocycloalkyl- oder Aminocycloalkylenrest mit 6 bis 44 C-Atomen oder einen gegebenenfalls substituierten Aryl- oder Arylenrest mit 6 bis 44 C-Atomen oder einen Ether- oder Thioetherrest mit 1 bis 20 O- oder S-Atomen oder O- und S-Atomen oder für ein Polymeres, das über O, S, NH, NR⁴ oder CH₂C(O) mit dem in Klammem stehenden Strukturelement verbunden ist, steht oder der Rest R³ mit dem Rest R¹ so verbunden ist, dass insgesamt ein gegebenenfalls substituiertes, gesättigtes oder ungesättigtes heterocyclisches Ringsystem mit 4 bis 24 C-Atomen gebildet wird, oder ein Gemisch aus zwei oder mehr Verbindungen der allgemeinen Formel III, enthalten.

Im Rahmen einer bevorzugten Ausffihrungsform der vorliegenden Erfindung wird als Verbindung der allgemeinen Formel III eine auf einer α,β-ungesättigten β-Aminocarbonsäure, insbesondere eine auf β-Aminocrotonsäure basierende Verbindung eingesetzt. Besonders geeignet sind hierbei die Ester oder Thioester der entsprechenden Aminocarbonsäuren mit einwertigen oder mehrwertigen Alkoholen oder Mercaptanen wobei X in den genannten Fällen jeweils für O oder S steht.

Wenn der Rest R³ zusammen mit X für einen Alkohol- oder Mercaptanrest steht, so kann ein derartiger Rest beispielsweise aus Methanol, Ethanol, Propanol, Isopropanol, Butanol, 2-Ethylhexanol, Isooctanol, Isononanol, Decanol, Laurylalkohol, Myristylalkohol, Palmitylalkohol, Stearylalkohol, Ethylenglykol, Propylenglykol, 1,3-Butandiol, 1,4-Butandiol, 1,6-Hexandiol, 1,10-Decandiol, Diethylenglykol, Thio-Diethanol, Trimethylolpropan, Glyzerin, Tris-(2-hydroxymethyl)-isocyanurat, Triethanolamin, Pentaerythrit, Di-Trimethylolpropan, Diglyzerin, Sorbitol, Mannitol, Xylitol, Di-Pentaerythrit sowie den entsprechenden Mercaptoderivaten der genannten Alkohole gebildet werden.

Im Rahmen einer besonders bevorzugten Ausführungsform der vorliegenden Erfindung wird als Verbindung der allgemeinen Formel III eine Verbindung eingesetzt, in der R¹ für einen linearen Alkylrest mit 1 bis 4 C-Atomen, R² für Wasserstoff und R³ für einen linearen oder verzweigten, gesättigten, ein- bis sechswertigen Alkyl- oder Alkylenrest mit 2 bis 12 C-Atomen oder einen linearen, verzweigten oder cyclischen 2- bis 6-wertigen Etheralkoholrest oder Thioetheralkoholrest steht.

Geeignete Verbindungen der allgemeinen Formel III umfassen beispielsweise β-Aminocrotonsäurestearylester, 1,4-Butandiol-di(β-aminocrotonsäure)ester, Thio-diethanol-β-aminocrotonsäureester, Trimethylolpropan-tri-β-aminocrotonsäureester, Pentaerythrit-tetra-β-aminocrotonsäureester, Dipentaerythrit-hexa-β-aminocrotonsäureester und dergleichen. Die genannten Verbindungen können in einer erfindungsgemäßen Stabilisatorzusammensetzung jeweils alleine oder als Gemisch aus zwei oder mehr davon enthalten sein.

Ebenfalls im Rahmen der vorliegenden Erfindung als Verbindungen der allgemeinen Formel III geeignet sind Aminouracilverbindungen der allgemeinen Formel IV 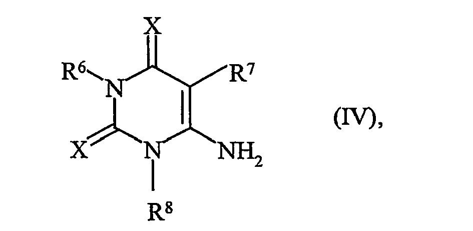 worin die Reste R⁶ und R⁷ jeweils unabhängig voneinander für Wasserstoff, einen gegebenenfalls substituierten linearen oder verzweigten, gesättigten oder ungesättigten aliphatischen Alkylrest mit 1 bis 44 C-Atomen, einen gegebenenfalls substituierten gesättigten oder ungesättigten Cycloalkylrest mit 6 bis 44 C-Atomen oder einen gegebenenfalls substituierten Arylrest mit 6 bis 44 C-Atomen oder einen gegebenenfalls substituierten Aralkylrest mit 7 bis 44 C-Atomen stehen und der Rest R⁸ für Wasserstoff, einen gegebenenfalls substituierten linearen oder verzweigten, gesättigten oder ungesättigten aliphatischen Kohlenwasserstoffrest mit 1 bis 44 C-Atomen, einen gegebenenfalls substituierten gesättigten oder ungesättigten cycloaliphatischen Kohlenwasserstoffrest mit 6 bis 44 C-Atomen oder einen gegebenenfalls substituierten aromatischen Kohlenwasserstoffrest mit 6 bis 44 C-Atomen steht.

Die Verbindung gemäß Formel IV fällt damit unter die Verbindungen gemäß Formel III, wobei n in der allgemeinen Formel III für 1 und die Reste R¹ und R³ gemäß der allgemeinen Formel IV zu dem Strukturelement der allgemeinen Formel V 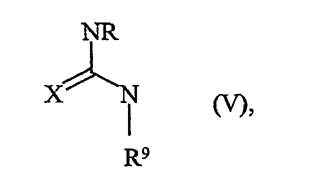 verbunden sind, worin X für S oder O steht. R¹ steht im Falle einer Verbindung der allgemeinen Formel VI also für N-R⁹, während R³ für -RN-C=X steht und beide Reste über eine N-C-Bindung kovalent zu einem heterocyclischen Ring verknüpft sind.

Vorzugsweise werden im Rahmen der vorliegenden Erfindung Verbindungen der allgemeinen Formel V eingesetzt, bei denen R⁹ für Wasserstoff steht.

Im Rahmen einer weiteren bevorzugten Ausführungsform der vorliegenden Erfindung werden in den erfindungsgemäßen Stabilisatorzusammensetzungen Verbindungen der allgemeinen Formel V eingesetzt, bei denen R⁶ und R⁸ für einen linearen oder verzweigten Alkylrest mit 1 bis 6 C-Atomen, beispielsweise Methyl, Ethyl, Propyl, Butyl, Pentyl oder Hexyl, einen mit OH-Gruppen substituierten linearen oder verzweigten Alkylrest mit 1 bis 6 C-Atomen, beispielsweise Hydroxymethyl, Hydroxyethyl, Hydroxypropyl, Hydroxybutyl, Hydroxypentyl oder Hydroxyhexyl, einen Aralkylrest mit 7 bis 9 C-Atomen, beispielsweise Benzyl, Phenylethyl, Phenylpropyl, Dimethylbenzyl oder Phenylisopropyl, wobei die genannten Aralkylreste beispielsweise mit Halogen, Hydroxy oder Methoxy substituiert sein können oder einen Alkenylrest mit 3 bis 6 C-Atomen, beispielsweise Vinyl, Alkyl, Methallyl, 1-Butenyl oder 1-Hexenyl stehen.

Im Rahmen einer bevorzugten Ausführungsform der vorliegenden Erfindung werden in den erfindungsgemäßen Stabilisatorzusammensetzungen Verbindungen der allgemeinen Formel V eingesetzt, worin R⁶ und R⁸ für Wasserstoff, Methyl, Ethyl, n-Propyl, Isopropyl, n-, i-, sec- oder t-Butyl stehen.

Ebenfalls als Verbindungen der allgemeinen Formel III geeignet sind beispielsweise Verbindungen, in denen die Reste R¹ und R² zu einem aromatischen oder heteroaromatischen System verbunden sind, beispielsweise Aminobenzoesäure, Aminosalicylsäure oder Aminopyridincarbonsäure und deren geeignete Derivate.

Im Rahmen einer bevorzugten Ausführungsform der vorliegenden Erfindung enthält eine erfindungsgemäße Stabilisatorzusammensetzung eine Verbindung der allgemeinen Formel III oder ein Gemisch aus zwei oder mehr Verbindungen der allgemeinen Formel III, beispielsweise eine Verbindung der allgemeinen Formel III, in einer Menge von etwa 0,1 bis etwa 99,5 Gew.-%, insbesondere etwa 5 bis etwa 50 Gew.-% oder etwa 5 bis etwa 25 Gew.-%.

Als weitere Zusatzstoffe eignen sich im Rahmen der vorliegenden Erfindung beispielsweise Verbindungen, die mindestens ein mercaptofunktionelles, sp²-hybridisiertes C-Atom aufweisen. Unter Verbindungen, die mindestens ein mercaptofunktionelles, sp²-hybridisiertes C-Atom aufweisen werden im Rahmen der vorliegenden Erfindung grundsätzlich alle Verbindungen verstanden, die ein Strukturelement Z=CZ-SH oder ein Strukturelement Z₂C=S aufweisen, wobei beide Strukturelemente tautomere Formen einer einzigen Verbindung sein können. Z steht dabei für ein Atom oder ein Strukturelement, das die Ausbildung entsprechender tautomerer Strukturen erlaubt, beispielsweise N oder C. Das sp²-hybridisierte C-Atom kann dabei Bestandteil einer gegebenenfalls substituierten aliphatischen Verbindung oder Bestandteil eines aromatischen Systems sein. Geeignete Verbindungstypen sind beispielsweise Thiocarbamidsäurederivate, Thiocarbamate, Thiocarbonsäuren, Thiobenzoesäurederivate, Thioacetonderivate oder Thioharnstoff oder Thioharnstoffderivate. Geeignete Verbindungen mit mindestens einem mercaptofunktionellen, sp²-hybridisierten C-Atom werden beispielsweise in der nicht vorveröffentlichten deutschen Patentanmeldung mit dem Aktenzeichen 101 09 366.7 genannt.

Im Rahmen einer bevorzugten Ausführungsform der vorliegenden Erfindung wird als Verbindung mit mindestens einem mercaptofunktionellen, sp²-hybridisierten C-Atom Thioharnstoff oder ein Thioharnstoffderivat eingesetzt.

Ebenfalls als Zusatzstoffe für die erfindungsgemäßen Stabilisatorzusammensetzungen eignen sich beispielsweise Carbazol oder Carbazolderivate oder Gemische aus zwei oder mehr davon.

Weiterhin als Zusatzstoffe geeignet sind beispielsweise 2,4-Pyrrolidindion oder dessen Derivate, wie sie beispielsweise in der nicht vorveröffentlichten deutschen Patentanmeldung mit dem Aktenzeichen 101 09 366.7 genannt werden.

Als Zusatzstoffe eignen sich weiterhin beispielsweise Epoxyverbindungen. Beispiele für derartige Epoxyverbindungen sind epoxidiertes Sojaöl, epoxidiertes Olivenöl, epoxidiertes Leinöl, epoxidiertes Rizinusöl, epoxidiertes Erdnussöl, epoxidiertes Maisöl, epoxidiertes Baumwollsamenöl sowie Glycidylverbindungen.

Glycidylverbindungen enthalten eine Glycidylgruppe, die direkt an ein Kohlenstoff-, Sauerstoff-, Stickstoff- oder Schwefelatom gebunden ist. Glycidyl- oder Methylglycidylester sind durch Umsetzung einer Verbindung mit mindestens einer Carboxylgruppe im Molekül und Epichlorhydrin bzw. Glyzerindichlorhydrin bzw. Methyl-epichlorhydrin erhältlich. Die Umsetzung erfolgt zweckmäßigerweise in Gegenwart von Basen.

Als Verbindungen mit mindestens einer Carboxylgruppe im Molekül können beispielsweise aliphatische Carbonsäuren eingesetzt werden. Beispiele für diese Carbonsäuren sind Glutarsäure, Adipinsäure, Pimelinsäure, Korksäure, Azelainsäure, Sebacinsäure oder dimerisierte oder trimerisierte Linolsäure, Acrylsäure, Methacrylsäure, Capronsäure, Caprylsäure, Laurinsäure, Myristinsäure, Palmitinsäure, Stearinsäure oder Pelargonsäure sowie die im weiteren Verlauf dieses Textes erwähnten Mono- oder Polycarbonsäuren. Ebenfalls geeignet sind cycloaliphatischen Carbonsäuren wie Cyclohexancarbonsäure, Tetrahydrophthalsäure, 4-Methyltetrahydrophthalsäure, Hexahydrophthalsäure, Endomethylentetrahydrophthalsäure oder 4-Methylhexahydrophthalsäure. Weiterhin geeignet sind aromatische Carbonsäuren wie Benzoesäure, Phthalsäure, Isophthalsäure, Trimellithsäure oder Pyromellithsäure.

Glycidylether oder Methylglycidylether lassen sich durch Umsetzung einer Verbindung mit mindestens einer freien alkoholischen OH-Gruppe oder einer phenolischen OH-Gruppe und einem geeignet substituierten Epichlorhydrin unter alkalischen Bedingungen oder in Anwesenheit eines sauren Katalysators und anschließender Alkalibehandlung erhalten. Ether dieses Typs leiten sich beispielsweise von acyclischen Alkoholen wie Ethylenglykol, Diethylenglykol oder höheren Poly(oxyethylen)glykolen, Propan-1,2-diol oder Poly(oxypropylen)glykolen, Butan-1,4-diol, Poly(oxytetramethylen)glykolen, Pentan-1,5-diol, Hexan-1,6-diol, Hexan-2,4,6-triol, Glyzerin, 1,1,1-Trimethylolpropan, Bis-Trimethylolpropan, Pentaerythrit, Sorbit sowie von Polyepichlorhydrinen, Butanol, Amylalkohol, Pentanol sowie von monofunktionellen Alkoholen wie Isooctanol, 2-Ethylhexanol, Isodecanol oder technischen Alkoholgemischen, beispielsweise technischen Fettalkoholgemischen, ab.

Geeignete Ether leiten sich auch von cycloaliphatischen Alkoholen wie 1,3- oder 1,4-Dihydroxycyclohexan, Bis(4-hydroxycyclohexyl)methan, 2,2-Bis(4-hydroxycyclohexyl)propan oder 1,1-Bis-(hydroxymethyl)cyclohexan-3-en ab oder sie besitzen aromatische Kerne wie N,N-Bis-(2-hydroxyethyl)anilin. Geeignete Epoxyverbindungen können sich auch von einkernigen Phenolen ableiten, beispielsweise von Phenol, Resorcin oder Hydrochinon, oder sie basieren auf mehrkernigen Phenolen wie Bis(4-hydroxyphenyl)methan, 2,2-Bis (4-hydroxyphenyl)propan, 2,2-Bis(3,5-dibrom-4-hydroxyphenyl)propan, 4,4'-Dihydroxydiphenylsulfonen oder auf unter sauren Bedingungen erhaltenen Kondensationsprodukten von Phenol mit Formaldehyd, beispielsweise Phenol-Novolaken.

Weitere im Rahmen der vorliegenden Erfindung als Zusatzstoffe geeignete, endständige Epoxide sind beispielsweise Glycidyl-1-naphthylether, Glycidyl-2-phenylphenylether, 2-Diphenylglycidylether, N-(2,3-Epoxypropyl)phthalimid oder 2,3-Epoxypropyl-4-methoxyphenylether.

Ebenfalls geeignet sind N-Glycidylverbindungen, wie sie durch Dehydrochlorierung der Redaktionsprodukte von Epichlorhydrin mit Aminen, die mindestens ein Aminowasserstoffatom enthalten, erhältlich sind. Solche Amine sind beispielsweise Anilin, N-Methylanilin, Toluidin, n-Butylamin, Bis(4-aminophenyl)methan, m-Xylylendiamin oder Bis(4-methylaminophenyl)methan.

Ebenfalls geeignet sind S-Glycidylverbindungen, beispielsweise Di-S-glycidyletherderivate, die sich von Dithiolen wie Ethan-1,2-dithiol oder Bis(4-mercaptomethylphenyl)ether ableiten.

Besonders geeignete Epoxyverbindungen sind beispielsweise in der EP-A 1 046 668 auf den Seiten 3 bis 5 beschrieben, wobei auf die dort enthaltene Offenbarung ausdrücklich Bezug genommen wird und diese als Bestandteil der Offenbarung des vorliegenden Textes betrachtet wird.

Weiterhin als Zusatzstoffe im Rahmen der vorliegenden Erfindung geeignet sind 1,3-Dicarbonylverbindungen, insbesondere die β-Diketone und β-Ketoester. Im Rahmen der vorliegenden Erfindung geeignet sind Dicarbonylverbindungen der allgemeinen Formel R C(O)CHR" -C(O)R"', wie sie beispielsweise auf S. 5 der EP- 1 046 668 beschrieben sind, auf die insbesondere im Hinblick auf die Reste R', R" und R'" ausdrücklich bezug genommen wird und deren Offenbarung als Bestandteil der Offenbarung des vorliegenden Textes betrachtet wird. Besonders geeignet sind hierbei beispielsweise Acetylaceton, Butanoylaceton, Heptanoylaceton, Stearoylaceton, Palmitoylaceton, Lauroylaceton, 7-tert-Nonylthioheptandion-2,4, Benzoylaceton, Dibenzoylmethan, Lauroylbenzoylmethan, Palmitoylbenzoylmethan, Stearoylbenzoylmethan, Isooctylbenzoylmethan, 5-Hydroxycapronylbenzoylmethan, Tribenzoylmethan, Bis(4-methylbenzoyl)methan, Benzoylp-chlorbenzoylmethan, Bis(2-hydroxybenzoyl)methan, 4-Methoxybenzoylbenzoylmethan, Bis(4-methoxybenzoyl)methan, Benzoylformylmethan, Benzoylacetylphenylmethan, 1-Benzoyl-1-acetylnonan, Stearoyl-4-methoxybenzoylmethan, Bis(4-tert-butylbenzoyl)methan, Benzoylphenylacetylmethan, Bis(cyclohexanoyl)methan, Dipivaloylmethan, 2-Acetylcyclopentanon, 2-Benzoylcyclopentanon, Diacetessigsäuremethyl-, -ethyl-, -butyl-, 2-ethylhexyl-, -dodecyl- oder -octadecylester sowie Propionyl- oder Butyrylessigsäureester mit 1 bis 18 C-Atomen sowie Stearoylessigsäureethyl-, -propyl-, -butyl-, hexyl- oder -octylester oder mehrkernige β-Ketoester wie sie in der EP-A 433 230 beschrieben sind, auf die ausdrücklich bezug genommen wird, oder Dehydracetsäure sowie deren Zink-, magnesium- oder Alkalisalze oder die Alkali- Erdalkali- oder Zinkchelate der genannten Verbindungen, sofern diese existieren.

1,3-Diketoverbindungen können in einer erfindungsgemäßen Stabilisatorzusammensetzung in einer Menge von bis zu etwa 20 Gew.-%, beispielsweise bis zu etwa 10 Gew.-%, enthalten sein.

Weiterhin als Zusatzstoffe im Rahmen der erfindungsgemäßen Stabilisatorzusammensetzung geeignet sind Polyole. Geeignete Polyole sind beispielsweise Pentaerythrit, Dipentaerythrit, Tripentaerythrit, Bistrimethylolpropan, Inosit, Polyvinylalkohol, Bistrimetylolethan, Trimethylolpropan, Sorbit, Maltit, Isomaltit, Lactit, Lycasin, Mannit, Lactose, Leucrose, Tris-(hydroxymethyl)isocyanurat, Palatinit, Tetramethylolcyclohexanol, Tetramethylolcyclopentanol, Tetramethylolcycloheptanol, Glyzerin, Diglyzerin, Polyglyzerin, Thiodiglyzerin oder 1-0-α-D-Glycopyranosyl-D-mannit-dihydrat.

Die als Zusatzstoffe geeigneten Polyole können in einer erfindungsgemäßen Stabilisatorzusammensetzung in einer Menge von bis zu etwa 30 Gew.-%, beispielsweise bis zu etwa 10 Gew.-% enthalten sein.

Ebenfalls als Zusatzstoffe geeignet sind beispielsweise sterisch gehinderte Amine wie sie in der EP-A 1 046 668 auf den Seiten 7 bis 27 genannt werden. Auf die dort offenbarten sterisch gehinderten Amine wird ausdrücklich Bezug genommen, die dort genannten Verbindungen werden als Bestandteil der Offenbarung des vorliegenden Textes betrachtet.

Die als Zusatzstoffe geeigneten sterisch gehinderten Amine können in einer erfindungsgemäßen Stabilisatorzusammensetzung in einer Menge von bis zu etwa 30 Gew.-%, beispielsweise bis zu etwa 10 Gew.-% enthalten sein.

Weiterhin als Zusatzstoffe in den erfindungsgemäßen Stabilisatorzusammensetzungen geeignet sind Hydrotalcite, Zeolithe und Alkalialumocarbonate. Geeignete Hydrotalcite, Zeolithe und Alkalialumocarbonate sind beispielsweise in der EP-A 1 046 668 auf den Seiten 27 bis 29, der EP-A 256 872 auf den Seiten 3, 5 und 7, der DE-C 41 06 411 auf Seite 2 und 3 oder der DE-C 41 06 404 auf Seite 2 und 3 beschrieben. Auf diese Druckschriften wird ausdrücklich bezug genommen und deren Offenbarung an den angegebenen Stellen wird als Bestandteil der Offenbarung des vorliegenden Textes betrachtet.

Die als Zusatzstoffe geeigneten Hydrotalcite, Zeolithe und Alkalialumocarbonate können in einer erfindungsgemäßen Stabilisatorzusammensetzung in einer Menge von bis zu etwa 50 Gew.-%, beispielsweise bis zu etwa 30 Gew.-% enthalten sein.

Ebenfalls im Rahmen der erfindungsgemäßen Stabilisatorzusammensetzungen als Zusatzstoffe geeignet sind beispielsweise Hydrocalumite der allgemeinen Formel VI

M²⁺ ₍₂₊ₓ₎Al³⁺ _{(1+y)}(OH)_{(6+z)}A^{j-} ₐ[Bᵣ]^{nl}_{b}*m H₂O (VI),

worin M für Calcium, Magnesium oder Zink oder Gemische aus zwei oder mehr davon, A für ein j-wertiges anorganisches oder organisches Säureanion, j für 1, 2 oder 3, B für ein von A verschiedenes anorganisches oder organisches Säureanion steht, r für eine ganze Zahl ≥ 1 steht und, sofern r >1 ist, den Polymerisationsgrad des Säureanions angibt und 1 für 1, 2 3 oder 4 steht und die Wertigkeit des Säureanions angibt, wobei für r = 11 für 2, 3 oder 4 steht und für r > 11 die Wertigkeit der einzelnen Monomereinheiten des Polyanions angibt und für 1, 2, 3 oder 4 steht und rl die Gesamtwertigkeit des Polyanions angibt und die folgenden Regeln für die Parameter x, y, a, b, r, z, und j gelten:
0≤x<0,6,
0 ≤ y< 0,4, wobei entweder x = 0 oder y = 0,
0 < a < 0,8/r und
z=1+2x+3y-ja-r/b.

Im Rahmen einer bevorzugten Ausführungsform der vorliegenden Erfindung werden als Zusatzstoffe Verbindungen der allgemeinen Formel VI eingesetzt, worin M für Calcium steht, das gegebenenfalls im Gemisch mit Magnesium oder Zink oder Magnesium und Zink vorliegen kann.

In der allgemeinen Formel VI steht A für ein r-wertiges anorganisches oder organisches Säureanion, wobei r für 1, 2 oder 3 steht. Beispiele für im Rahmen von erfindungsgemäß einsetzbaren Hydrocalumiten vorliegende Säureanionen sind Halogenidionen, SO₃ ²⁻, SO₄²⁻, S₂O₃²⁻, S2O₄²⁻, HPO₃²⁻, PO₄³⁻, CO₃²⁻, Alkyl- und Dialkylphosphate, Alkylmercaptide und Alkylsulfonate, worin die Alkylgruppen gleich oder verschieden, geradkettig, verzweigt oder cyclisch sein können und vorzugsweise 1 bis etwa 20 C-Atome aufweisen. Ebenfalls als Säureanionen A geeignet sind die Anionen gegebenenfalls funktionalisierter Di-, Tri- oder Tetracarbonsäuren wie Maleat, Phthalat, Aconitat, Trimesinat, Pyromellitat, Maleat, Tartrat, Citrat sowie Anionen der isomeren Formen der Hydroxyphthalsäure oder der Hydroxymesinsäure. Im Rahmen einer bevorzugten Ausführungsform der vorliegenden Erfindung steht A für ein anorganisches Säureanionen, insbesondere ein Halogenidion, beispielsweise F⁻, Cl⁻ oder Br⁻, vorzugsweise für Cl⁻.

In der allgemeinen Formel VI steht B für ein Säureanion, das von A verschieden ist. Für den Fall, dass in der allgemeinen Formel VI r für die Zahl 1 steht, steht Buchstabe B für ein 1-wertiges, anorganisches oder organisches Säureanion, wobei 1 für die Zahl 2, 3 oder 4 steht. Beispiele für im Rahmen von erfindungsgemäß einsetzbaren Verbindungen der allgemeinen Formel V vorliegende Säureanionen B sind beispielsweise O²⁻, SO₃²⁻, SO₄²⁻, S₂O₃²⁻, S₂O₄²⁻, HPO₃²⁻, PO₄³⁻, CO₃²⁻, Alkyl- und Dialkylphosphate, Alkylmercaptide und Alkylsulfonate, worin die Alkylgruppen, gleich oder verschieden, geradkettig oder verzweigt oder cyclisch sein können und vorzugsweise 1 bis etwa 20 C-Atome aufweisen. Ebenfalls als Säureanionen A geeignet sind die Anionen gegebenenfalls funktionalisierter Di-, Tri- oder Tetracarbonsäuren wie Maleat, Phthalat, Aconitat, Trimesinat, Pyromellitat, Maleat, Tartrat, Citrat sowie Anionen der isomeren Formen der Hydroxyphthalsäure oder der Hydroxymesinsäure. Vorzugsweise steht B im Rahmen der vorliegenden Erfindung in Formel V für ein Borat oder ein Anion einer gegebenenfalls funktionalisierte Di-, Tri- oder Tetracarbonsäure. Besonders bevorzugt sind dabei Carbonsäureanionen und Anionen von Hydroxycarbonsäuren mit mindestens zwei Carboxylgruppen, wobei Citrate ganz besonders bevorzugt sind.

Für den Fall dass r in der allgemeinen Formel VI für eine Zahl von mehr als 1 steht, steht der Term [Bᵣ]^{rl-} für ein anorganisches oder organisches Polyanion mit dem Polymerisationsgrad r und der Wertigkeit 1 der einzelnen Monomereinheiten des Polyanions mit der Gesamtwertigkeit rl, wobei 1 gleich oder größer als 1 ist. Beispiele für geeignete Polyanionen [Bᵣ]^{r1-} sind Polyacrylate, Polycarboxylate, Polyborate, Polysilikate, Polyphosphate oder Polyphosphonate.

In allen oben genannten Fällen können die Säureanionen A und B in einem beliebigen Verhältnis a/b in den Verbindungen der allgemeinen Formel VI enthalten sein.

Bei den Verbindungen der allgemeinen Formel VI handelt es sich nicht um schichtartig aufgebaute Verbindungen vom Hydrotalcit- bzw. Hydrocalumittyp, sondern um eine physikalische Mischung von M²⁺/Aluminiumoxidhydraten mit Salzen zweiwertiger Metalle. Röntgendif&aktogramme der in der erfindungsgemäßen Zusammensetzung eingesetzten Verbindungen der allgemeinen Formel VI zeigen eindeutig, dass es sich nicht um diskrete kristalline Verbindungen eines bekannten Typs sondern um röntgenamorphe Mischungen handelt.

Zur Herstellung der Verbindungen gemäß der allgemeinen Formel VI können, bekannten Verfahren folgend, Lösungen bzw. Suspensionen oxidischer Formen der gewünschten Kationen (z.B. NaAlO₂, Ca(OH)₂, Zn(OH)₂, Al(OH)₃) mit Lösungen oder Suspension von Salzen oder den entsprechenden Säuren der gewünschten Anionen gemischt und bei Temperaturen zwischen 40 und 95 °C zur Reaktion gebracht werden. Dabei können die Reaktionszeiten zwischen 15 und 300 Minuten variiert werden.

Wenn eine Oberflächenbehandlung der Reaktionsprodukte gewünscht ist, können die Reaktionsprodukte direkt mit dem Oberflächenbehandlungsmittel versetzt, das Produkt durch Filtration von der Mutterlauge getrennt und bei geeigneten Temperaturen zwischen 100 und 250 °C getrocknet werden. Die zugesetzte Menge an Oberflächenbehandlungsmittel beträgt beispielsweise etwa 1 bis etwa 20 Gew.-%.

Verbindungen der allgemeinen Formel VI können im Rahmen der erfindungsgemäßen Stabilisatorzusammensetzungen in einer Menge von bis zu etwa 50 Gew.-%, beispielsweise bis zu etwa 30 oder bis zu etwa 15 Gew.-% eingesetzt werden.

Im Rahmen einer weiteren Ausfizhrungsform der vorliegenden Erfindung kann enthält eine erfindungsgemäße Stabilisatorzusammensetzung mindestens ein basisches Calciumsalz enthalten. Als basische Calciumsalze geeignet sind beispielsweise Calciumoxid, Calciumcarbonat oder, sofern es nicht bereits zwingender Bestandteil der erfindungsgemäßen Stabilisatorzusammensetzungen ist, Calciumhydroxid. Die basischen Calciumsalze können gegebenenfalls oberflächenmodifiziert sein.

Ebenfalls als Zusatzstoffe zu den erfindungsgemäßen Stabilisatorzusammensetzung geeignet sind Metalloxide, Metallhydroxide und Metallseifen von gesättigten, ungesättigten, geradkettigen oder verzweigten, aromatischen, cycloaliphatischen oder aliphatischen Carbonsäuren oder Hydroxycarbonsäuren mit vorzugsweise etwa 2 bis etwa 22 C-Atomen.

Als Metallkationen weisen die als Zusatzstoffe geeigneten Metalloxide, Metallhydroxide oder Metallseifen vorzugsweise ein zweiwertiges Kation auf, besonders geeignet sind die Kationen von Calcium oder Zink oder Blei oder Gemische aus zwei oder mehr davon, im Rahmen einer bevorzugten Ausführungsform der vorliegenden Erfindung sind die erfindungsgemäßen Stabilisatorzusammensetzungen jedoch frei von Zink.

Beispiele für geeignete Carbonsäureanionen umfassen Anionen von monovalenten Carbonsäuren wie Essigsäure, Propionsäure, Buttersäure, Valeriansäure, Hexansäure, Önanthsäure, Octansäure, Neodecansäure, 2-Ethylhexansäure, Pelargonsäure, Decansäure, Undecansäure, Dodecansäure, Tridecansäure, Myristylsäure, Palmitinsäure, Laurylsäure, Isostearinsäure, Stearinsäure, 12-Hydroxystearinsäure, 9,10-Dihydroxystearinsäure, Ölsäure, 3,6-Dioxaheptansäure, 3,6,9-Trioxadecansäure, Behensäure, Benzoesäure, p-tert-Butylbenzoesäure, Dimethylhydroxybenzoesäure, 3,5-Di-tert-butyl-4-hydroxybenzoesäure, Tolylsäure, Dimethylbenzoesäure, Ethylbenzoesäure, n-Propylbenzoesäure, Salicylsäure, p-tert-Octylsalicylsäure, Sorbinsäure, Anionen von divalenten Carbonsäuren bzw. deren Monoestem wie Oxalsäure, Malonsäure, Maleinsäure, Weinsäure, Zimtsäure, Mandelsäure, Äpfelsäure, Glykolsäure, Oxalsäure, Salicylsäure, Polyglykoldicarbonsäuren mit einem Polymerisationsgrad von etwa 10 bis etwa 12, Phthalsäure, Isophthalsäure, Terephthalsäure oder Hydroxyphthalsäure, bis etwa 12, Phthalsäure, Isophthalsäure, Terephthalsäure oder Hydroxyphthalsäure, Anionen von tri- oder tetravalenten Carbonsäuren bzw. deren Mono-, Di- oder Triestern wie sie in Hemimellithsäure, Trimellithsäure, Pyromellithsäure oder Zitronensäure sowie ferner sogenannte überbasische Carboxylate wie sie beispielsweise in der DE-A 41 06 404 oder der DE-A 40 02 988 beschrieben werden, wobei die Offenbarung der letztgenannten Dokumente als Bestandteil der Offenbarung des vorliegenden Textes betrachtet wird.

Im Rahmen einer bevorzugten Ausführungsform der vorliegenden Erfindung werden als Zusatzstoffe Metallseifen eingesetzt, deren Anionen sich von gesättigten oder ungesättigten Carbonsäuren oder Hydroxycarbonsäuren mit etwa 8 bis etwa 20 C-Atomen ableiten. Besonders bevorzugt sind hierbei Stearate, Oleate, Laurate, Palmitate, Behenate, Versatate, Hydroxystearate, Dihydroxystearate, p-tert-Butylbenzoate oder (Iso)Octanoate von Calcium oder Zink oder Gemische aus zwei oder mehr davon.

Eine erfindungsgemäße Stabilisatorzusammensetzung kann die genannten Metalloxide, Metallhydroxide oder Metallseifen oder ein Gemisch aus zwei oder mehr davon, in einer Menge von bis zu etwa 50 Gew.-%, beispielsweise in einer Menge von bis etwa 30 Gew.-%, enthalten.

Eine erfindungsgemäße Stabilisatorzusammensetzung kann darüber hinaus weiterhin als Thermostabilisatorkomponente eine Organozinnverbindung oder ein Gemisch aus zwei oder mehr Organozinnverbindungen enthalten. Geeignete Organozinnverbindungen sind beispielsweise Methylzinn-tris-(isooctyl-thioglycolat), Methylzinn-tris-(isooctyl-3-mercaptopropionat), Methylzinn-tris-(isodecyl-thioglycolat), Dimethylzinn-bis-(isooctyl-thioglycolat), Di-butylzinn-bis-(isooctyl-thioglycolat), Monobutylzinn-tris-(isooctyl-thioglycolat), Dioctylzinnbis-(isooctyl-thioglycolat), Monooctylzinn-tris-(isooctyl-thioglycolat) Dimethylzinn-bis-(2-ethylhexyl-β-mercaptopropionat), feste oder flüssige Zinnmaleate sowie deren Gemische oder handelsübliche Organozinnsalze oder Gemische aus zwei oder mehr der genannten Verbindungen.

Darüber hinaus sind im Rahmen der erfindungsgemäßen Stabilisatorzusammensetzungen die in der EP-A 0 742 259 auf den Seiten bis 18 bis 29 genannten und in ihrer Herstellung beschriebenen Organozinnverbindungen einsetzbar. Auf die obengenannte Offenbarung wird ausdrücklich Bezug genommen, wobei die dort genannten Verbindungen und deren Herstellung als Bestandteil der Offenbarung des vorliegenden Textes verstanden werden.

Eine erfindungsgemäße Stabilisatorzusammensetzung kann die beschriebenen Organozinnverbindungen in einer Menge von 0 bis zu etwa 20 Gew.-%, insbesondere 0 bis etwa 10 Gew.-%, enthalten.

Im Rahmen einer weiteren Ausführungsform der vorliegenden Erfindung kann eine erfindungsgemäße Stabilisatorzusammensetzung organische Phosphitester mit 1 bis 3 identischen, paarweise identischen oder unterschiedlichen organischen Resten enthalten. Geeignete organische Reste sind beispielsweise lineare oder verzweigte, gesättigte oder ungesättigte Alkylreste mit 1 bis 24 C-Atomen, gegebenenfalls substituierten Alkylreste mit 6 bis 20 C-Atomen oder gegebenenfalls substituierte Aralkylreste mit 7 bis 20 C-Atomen. Beispiele für geeignete organische Phosphitester sind Tris-(nonylphenyl)-, Trilauryl-, Tributyl-, Trioctyl-, Tridecyl-, Tridodecyl-, Triphenyl-, Octyldiphenyl-, Dioctylphenyl-, Tri-(Octylphenyl)-, Tribenzyl-, Butyldikresyl-, Octyl-di(octylphenyl)-, Tris-(2-ethylhexyl)-, Tritolyl-, Tris-(2-cyclohexylphenyl)-, Tri-α-naphthyl-, Tris-(phenylphenyl)-, Tris-(2-phenylethyl)-, Tris-(dimethylphenyl)-, Trikresyl- oder Tris-(p-nonylphenyl)-phosphit oder Tristearyl-sorbit-triphosphit oder Gemische aus zwei oder mehr davon.

Eine erfindungsgemäße Stabilisatorzusammensetzung kann die beschriebenen Phosphitverbindungen in einer Menge von 0 bis zu etwa 30 Gew.-%, insbesondere 0 bis etwa 10 Gew.-%, enthalten.

Eine erfindungsgemäße Stabilisatorzusammensetzung kann weiterhin als Zusatzstoffe blockierte Mercaptane enthalten, wie sie in der EP-A 0 742 259 auf den Seiten 4 bis 18 genannt werden. Auf die Offenbarung in der angegebenen Schrift wird ausdrücklich Bezug genommen, sie wird als Bestandteil der Offenbarung des vorliegenden Textes verstanden.

Eine erfindungsgemäße Stabilisatorzusammensetzung kann die beschriebenen blockierten Mercaptane in einer Menge von 0 bis zu etwa 30 Gew.-%, insbesondere 0 bis zu etwa 10 Gew.-%, enthalten.

Eine erfindungsgemäße Stabilisatorzusammensetzung kann weiterhin Gleitmittel wie Paraffinwachse, Polyethylenwachse, Polypropylenwachse, Montanwachse, Estergleitmittel wie Fettsäureester, gereinigte oder hydrierte natürliche oder synthetische Triglyceride oder Partialester, Amidwachse, Chlorparaffine, Glyzerinester oder Erdalkaliseifen enthalten. Verwendbare Gleitmittel werden darüber hinaus auch in "Kunststoffadditive", R. Gächter/H. Müller, Carl Hanser Verlag, 3. Auflage, 1989, S. 478 - 488 beschrieben. Weiterhin als Gleitmittel geeignet sind beispielsweise Fettketone wie sie in der DE 4,204,887 beschrieben werden sowie Gleitmittel auf Silikonbasis, wie sie beispielsweise die EP-A 0 259 783 nennt, oder Kombinationen davon, wie sie in der EP-A 0 259 783 genannt werden. Auf die genannten Dokumente wird hiermit ausdrücklich Bezug genommen, deren Gleitmittel betreffende Offenbarung wird als Bestandteil der Offenbarung des vorliegenden Textes betrachtet. Besonders geeignet sind im Rahmen der vorliegenden Erfindung Gleitmittel der Produktreihe Baerolub® der Firma Baerlocher GmbH (Unterschleißheim, Deutschland).

Eine erfindungsgemäße Stabilisatorzusammensetzung kann die beschriebenen Gleitmittel in einer Menge von 0 bis zu etwa 70 Gew.-%, insbesondere bis etwa 40 Gew.-%, enthalten.

Ebenfalls als Zusatzstoffe für Stabilisatorzusammensetzungen gemäß der vorliegenden Erfindung geeignet sind organische Weichmacher.

Als Weichmacher geeignet sind beispielsweise Verbindungen aus der Gruppe der Phthalsäureester wie Dimethyl-, Diethyl-, Dibutyl-, Dihexyl-, Di-2-ethylhexyl-, Di-n-octyl-, Di-iso-octyl-, Di-iso-nonyl-, Di-iso-decyl-, Dicyclohexyl-, Di-methylcyclohexyl-, Dimethylglykol-, Dibutylglykol-, Benzylbutyl- oder Diphenylphthalat sowie Gemische von Phthalaten, beispielsweise Gemische von Alkylphthalaten mit 7 bis 9 oder 9 bis 11 C-Atomen im Esteralkohol oder Gemische von Alkylphthalaten mit 6 bis 10 und 8 bis 10 C-Atomen im Esteralkohol. Besonders im Sinne der vorliegenden Erfindung geeignet sind dabei Dibutyl-, Dihexyl-, Di-2-ethylhexyl-, Di-n-octyl-, Di-iso-octyl-, Di-iso-nonyl-, Di-iso-decyl-, Di-iso-tridecyl- und Benzylbutylphthalat sowie die genannten Mischungen von Alkylphthalaten.

Weiterhin als Weichmacher geeignet sind die Ester aliphatischer Dicarbonsäuren, insbesondere die Ester von Adipin-, Azelain- oder Sebacinsäure oder Gemische aus zwei oder mehr davon. Beispiele für derartige Weichmacher sind Di-2-ethylhexyladipat, Di-isooctyladipat, Di-iso-nonyladipat, Di-iso-decyladipat, Benzylbutyladipat, Benzyloctyladipat, Di-2-ethylhexylazelat, Di-2-ethylhexylsebacat und Di-iso-decylsebacat. Bevorzugt sind im Rahmen einer weiteren Ausführungsform der vorliegenden Erfindung Di-2-ethylhexylacetat und Di-iso-octyladipat.

Ebenfalls als Weichmacher geeignet sind Trimellithsäureester wie Tri-2-ethylhexyltrimellithat,Tri-iso-tridecyltrimellithat, Tri-iso-octyltrimellithat sowie Trimellithsäureester mit 6 bis 8, 6 bis 10, 7 bis 9 oder 9 bis 11 C-Atomen in der Estergruppe oder Gemische aus zwei oder mehr der genannten Verbindungen.

Weiterhin geeignete Weichmacher sind beispielsweise Polymerweichmacher, wie sie in "Kunststoffadditive", R. Gächter/H. Müller, Carl Hanser Verlag, 3. Auflage, 1989, Kapitel 5.9.6, Seiten 412-415, oder "PVC Technology", W. V. Titow, 4th Edition, Elsevier Publishers, 1984, Seiten 165-170, angegeben sind. Die gebräuchlichsten Ausgangsmaterialien für die Herstellung von Polyesterweichmacher sind beispielsweise Dicarbonsäuren wie Adipin-, Phthal-, Azelain- oder Sebacinsäure sowie Diole wie 1,2-Propandiol, 1,3-Butandiol, 1,4-Butandiol, 1,6-Hexandiol, Neopentylglykol oder Diethylenglykol oder Gemische aus zwei oder mehr davon.

Ebenfalls als Weichmacher geeignet sind Phosphorsäureester, wie sie im "Taschenbuch der Kunststoffadditive", Kapitel 5.9.5, S. 408-412 zu finden sind. Beispiele für geeignete Phosphorsäureester sind Tributylphosphat, Tri-2-ethylbutylphosphat, Tri-2-ethylhexylphosphat, Trichlorethylphosphat, 2-Ethyl-hexyl-di-phenylphosphat, Triphenylphosphat, Trikresylphosphat oder Trixylenylphosphat, oder Gemische aus zwei oder mehr davon.

Weiterhin als Weichmacher geeignet sind chlorierte Kohlenwasserstoffe (Paraffine) oder Kohlenwasserstoffe wie sie in "Kunststoffadditive", R. Gächter/H. Müller, Carl Hanser Verlag, 3. Auflage, 1989, Kapitel 5.9.14.2, S. 422-425 und Kapitel 5.9.14.1, S. 422, beschrieben sind.

Eine erfindungsgemäße Stabilisatorzusammensetzung kann die beschriebenen Weichmacher in einer Menge von 0 bis zu etwa 99,5 Gew.-%, insbesondere bis zu etwa 30 Gew.-%, bis zu etwa 20 Gew.-% oder bis zu etwa 10 Gew.-% enthalten. Im Rahmen einer bevorzugten Ausführungsform der vorliegenden Erfindung beträgt die Untergrenze für die beschriebenen Weichmacher als Bestandteil der erfindungsgemäßen Stabilisatorzusammensetzungen etwa 0,1 Gew.% oder mehr, beispielsweise etwa 0,5 Gew.-%, 1 Gew.-%, 2 Gew.-% oder 5 Gew.%.

Ebenfalls als Bestandteil der erfindungsgemäßen Stabilisatorzusammensetzungen geeignet sind Pigmente. Beispiele für geeignete anorganische Pigmente sind Titandioxid, Ruß, Fe₂O₃, Sb₂O₃, (Ba, Sb)O₂, Cr₂O₃, Spinelle wie Kobaltblau und Kobaltgrün, Cd (S, Se) oder Ultramarinblau. Als organische Pigmente sind beispielsweise Azopigmente, Phthalocyaninpigmente, Chinacridonpigmente, Perylenpigmente, Diketopyrrolopyrrolpigmente oder Anthachinonpigmente geeignet.

Eine erfindungsgemäße Stabilisatorzusammensetzung kann weiterhin Füllstoffe wie sie im "Handbook of PVC Formulating", E. J. Wickson, John Wiley & Sons, Inc., 1993, auf den Seiten 393-449 beschrieben sind oder Verstärkungsmittel wie sie im "Taschenbuch der Kunststoffadditive", R. Gächter/H. Müller, Carl Hanser Verlag, 1990, Seiten 549-615 beschrieben sind, enthalten. Besonders geeignete Füllstoffe oder Verstärkungsmittel sind beispielsweise Calciumcarbonat (Kreide), Dolomit, Wollastonit, Magnesiumoxid, Magnesiumhydroxid, Silikate, Glasfasern, Talk, Kaolin, Kreide, Ruß oder Graphit, Holzmehl oder andere nachwachsende Rohstoffe. Im Rahmen einer bevorzugten Ausführungsform der vorliegenden Erfindung enthält eine erfindungsgemäße Stabilisatorzusammensetzung Kreide.

Im Rahmen einer weiteren Ausführungsform der vorliegenden Erfindung können die erfindungsgemäßen Stabilisatorzusammensetzungen Antioxidantien, UV-Absorber und Lichtschutzmittel oder Treibmittel enthalten. Geeignete Antioxidantien sind beispielsweise in der EP-A 1 046 668 auf den Seiten 33 bis 35 beschrieben. Bevorzugt werden im Rahmen der vorliegenden Erfindung als Antioxidantien die Produkte der Irganox®-Reihe (Hersteller: Ciba Specialty Chemicals), beispielsweise Irganox® 1010 oder 1076 oder Produkte der Lowinox-Reihe der Fa. Great Lakes eingesetzt.

Geeignete UV-Absorber und Lichtschutzmittel werden in der EP-A 1 046 668 auf den Seiten 35 und 36 genannt. Auf beide Offenbarungen wird hier ausdrücklich Bezug genommen, wobei die Offenbarungen als Bestandteil des vorliegenden Textes betrachtet werden.

Eine erfindungsgemäße Stabilisatorzusammensetzung kann darüber hinaus noch Schlagzähmodifikatoren und Verarbeitungshilfen, Geliermittel, Antistatika, Biozide, Metalldesaktivatoren, optische Aufheller, Flammschutzmittel sowie Antifoggingverbindungen enthalten. Geeignete Verbindungen dieser Verbindungsklassen sind beispielsweise in "Kunststoff Additive", R. Keßler/H. Müller, Carl Hanser Verlag, 3. Auflage, 1989 sowie im "Handbook of PVC Formulating", E.J. Wilson, J. Wiley & Sons, 1993 beschrieben.

Die erfindungsgemäßen Stabilisatorzusammensetzungen lassen sich grundätzlich in ihrer einfachsten Form durch Vermischen eines Trägermaterials der allgemeinen Formel I Ca-ₓAl₂(OH)₂₍ₓ₊₂₎HPO₃ · m H₂O (I), worin x für eine Zahl von 2-12 und m für eine Zahl von 0 bis 12 steht, und eines Salzes einer halogenhaltigen Oxysäure oder eines Gemischs aus zwei oder mehr solcher Salze, wobei beim Vermischen mindestens ein Salz einer halogenhaltigen Oxysäure in gelöster Form vorliegt, herstellen.

Gegenstand der vorliegenden Erfindung ist daher auch eine Stabilisatorzusammensetzung, herstellbar durch Vermischen eines Trägermaterials der allgemeinen Formel I Ca-ₓAl₂(OH)₂₍ₓ₊₂₎HPO₃ · m H₂O (I), worin x für eine Zahl von 2-12 und m für eine Zahl von 0 bis 12 steht, und eines Salzes einer halogenhaltigen Oxysäure oder eines Gemischs aus zwei oder mehr solcher Salze, wobei beim Vermischen mindestens ein Salz einer halogenhaltigen Oxysäure in gelöster Form vorliegt.

Als Lösemittel für das Salze einer halogenhaltigen Oxysäure oder eines Gemischs aus zwei oder mehr solcher Salze eignen sich prinzipiell alle Lösemittel, die einerseits das Salz einer halogenhaltigen Oxysäure oder das Gemisch aus zwei oder mehr solcher Salze in ausreichender Menge lösen und andererseits nach Vermischen mit dem pulverförmigen Trägermaterial gegebenenfalls durch Erwärmen der Mischung oder durch Anlegen eines verminderten Drucks oder durch eine Kombination beider Maßnahmen wieder entfernbar sind, so dass eine Mischung aus Trägermaterial und geträgertem Salz einer halogenhaltigen Oxysäure oder einem Gemisch aus zwei oder mehr solcher Salze entsteht.

Grundsätzlich ist die Zugabemenge des gelösten Salzes einer halogenhaltigen Oxysäure oder des Gemischs aus zwei oder mehr solcher Salze beliebig im Rahmen der bereits oben im Text genannten Grenzen wählbar. Es hat sich jedoch als vorteilhaft herausgestellt, wenn beim Vermischen das Salz einer halogenhaltigen Oxysäure oder das Gemischs aus zwei oder mehr solcher Salze in einer Menge von 1 bis 50 Gew.-%, bezogen auf halogenhaltige Oxysäure und Trägermaterial, zugegeben wird.

Unter "Vermischen" wird im Rahmen des vorliegenden Textes auch ein Verfahren verstanden, bei dem ein entsprechendes Salz einer halogenhaltigen Oxysäure in Gegenwart des Trägermaterials aus einer Lösung ausgefällt wird.

Eine derartige Stabilisatorzusammensetzung kann darüber hinaus, wie bereits oben beschrieben, noch einen oder mehrere Zusatzstoffe enthalten.

Ein weiterer Gegenstand der vorliegenden Erfindung ist ein Verfahren zur Herstellung einer erfindungsgemäßen Stabilisatorzusammensetzung, bei dem ein Trägermaterial der allgemeinen Formel CaₓAl₂(OH)₂₍ₓ₊₂₎HPO₃ · m H₂O, worin x für eine Zahl von 2-12 und m für eine Zahl von 0 bis 12 steht, und ein Salzes einer halogenhaltigen Oxysäure oder ein Gemisch aus zwei oder mehr solcher Salze, vermischt wird, wobei beim Vermischen mindestens ein Salz einer halogenhaltigen Oxysäure in gelöster Form vorliegt.

Die Umsetzung des pulverförmigen Trägermaterials mit der wäßrigen Lösung kann grundsätzlich auf beliebige Weise geschehen, sofern für eine ausreichende Durchmischung von Pulver und wäßrige Lösung besorgt wird. Geeignet zur Durchführung des erfindungsgemäßen Verfahrens sind beispielsweise übliche Mischvorrichtungen wie Besenmischer oder Pflugscharmischer. Besonders geeignet sind jedoch Verfahren, zu einer besonders feinen Verteilung der miteinander reagierenden Verbindungen führen, beispielsweise Wirbelschichtverfahren, Sprühturmverfahren oder Jet-Strahl-Verfahren.

Das erfindungsgemäße Verfahren kann beispielsweise auch als Kombination von Misch- und Mahlverfahren durchgeführt werden. In diesem Fall kann beispielsweise während der Vermahlung eines Anhydrids oder eines Gemischs aus zwei oder Anhydriden, wie oben beschrieben, eine wäßrige Lösung eines Salzes einer halogenhaltige Oxysäure oder eines Gemischs aus zwei oder mehr solcher Salze im Rahmen des Mahlvorgangs zugeführt werden.

Wenn eine erfindungsgemäße Stabilisatorzusammensetzung neben den beiden Hauptkomponenten noch einen oder mehrere Zusatzstoffe enthalten soll, so können diese Zusatzstoffe vor, während oder nach der Vermischung des Trägermaterials mit der Lösung des Salzes einer halogenhaltigen Oxysäure oder dem Gemisch aus zwei oder mehr solcher Salze zugegeben werden. Eine Zugabe von Zusatzstoffen vor oder während des Vermischens sollte jedoch nur dann erfolgen, wenn die Zusatzstoffe gegenüber den an der Vermischung beteiligten Verbindungen inert sind. Im anderen Fall, nämlich wenn die Zusatzstoffe nicht inert sind, werden sie, sofern die erfindungsgemäße Stabilisatorzusammensetzung solche Zusatzstoffe enthalten soll, erst nach der Umsetzung zugegeben.

Die erfindungsgemäßen Stabilisatorzusammensetzungen eignen sich zur Stabilisierung halogenhaltiger Polymerer. Gegenstand der vorliegenden Erfindung ist daher auch eine Polymerzusammensetzung, enthaltend ein halogenhaltiges Polymeres oder ein Gemisch aus zwei oder mehr halogenhaltigen Polymeren und eine erfindungsgemäße Stabilisatorzusammensetzung.

Beispiele für derartige halogenhaltige Polymere sind Polymere des Vinylchlorids, Vinylharze die Vinylchlorideinheiten im Polymerrückgrat enthalten, Copolymere von Vinylchlorid und Vinylestern aliphatischer Säuren, insbesondere Vinylacetat, Copolymere von Vinylchlorid mit Estern der Acryl- und Methacrylsäure oder Acrylnitril oder Gemischen aus zwei oder mehr davon, Copolymere des Vinylchlorids mit Dienverbindungen oder ungesättigten Dicarbonsäuren oder deren Anhydriden, beispielsweise Copolymere des Vinylchlorids mit Diethylmaleat, Diethylfumarat oder Maleinsäureanhydrid, nachchlorierte Polymere und Copolymere des Vinylchlorids, Copolymere des Vinylchlorids und Vinylidenchlorids mit ungesättigten Aldehyden, Ketonen und anderen Verbindungen wie Acrolein, Crotonaldehyd, Vinylmethylketon, Vinylmethylether, Vinylisobutylether und dergleichen, Polymere und Copolymere des Vinylidenchlorids mit Vinylchlorid und anderen polymerisierbaren Verbindungen, wie sie bereits oben genannt wurden, Polymere des Vinylchloracetats und Dichlordivinylethers, chlorierte Polymere des Vinylacetats, chlorierte polymere Ester der Acrylsäure und der α-substituierten Acrylsäuren, chlorierte Polystyrole, beispielsweise Polydichlorstyrol, chlorierte Polymere des Ethylens, Polymere und nachchlorierte Polymere von Chlorbutadien und deren Copolymere mit Vinylchlorid sowie Mischungen aus zwei oder mehr der genannten Polymeren oder Polymermischungen, die eines oder mehrere der obengenannten Polymere enthalten. Im Rahmen einer bevorzugten Ausführungsform der vorliegenden Erfindung werden die erfindungsgemäßen Stabilisatorzusammensetzungen zur Herstellung von Formteilen aus PVC-U wie Fensterprofilen, technischen Profilen, Rohren und Platten eingesetzt.

Ebenfalls zur Stabilisierung mit den erfindungsgemäßen Stabilisatorzusammensetzungen geeignet sind die Pfropfpolymerisate von PVC mit EVA, ABS oder MBS. Bevorzugte Substrate für derartige Propfcopolymere sind außerdem die vorstehend genannten Homo- und Copolymerisate, insbesondere Mischungen von Vinylchlorid-Homopolymerisaten mit anderen thermoplastischen oder elastomeren Polymeren, insbesondere Blends mit ABS, MBS, NBR, SAN, EVA, CPE; MBAS, PAA (Polyalkylacrylat), PAMA (Polyalkylmethacrylat, insbesondere PMMA - Polymethylmethacrylat), EPDM, Polyamiden oder Polylactonen.

Ebenfalls zur Stabilisierung mit den erfindungsgemäßen Stabilisatorzusammensetzungen geeignet sind Gemische von halogenierten und nicht-halogenierten Polymeren, beispielsweise Gemische der obengenannten nicht-halogenierten Polymeren mit PVC, insbesondere Gemische von Polyurethanen und PVC.

Weiterhin können mit den erfindungsgemäßen Stabilisatorzusammensetzungen auch Rezyklate chlorhaltiger Polymere stabilisiert werden, wobei grundsätzlich alle Rezyklate der obengenannten, halogenierten Polymeren hierzu geeignet sind. Geeignet ist im Rahmen der vorliegenden Erfindung beispielsweise PVC-Rezyklat.

Im Rahmen einer bevorzugten Ausführungsform der vorliegenden Erfindung enthält eine erfindungsgemäße Polymerzusammensetzung die erfindungsgemäße Stabilisatorzusammensetzung in einer Menge von 0,1 bis 20 phr, insbesondere etwa 0,5 bis etwa 15 phr oder etwa 1 bis etwa 12 phr. Die Einheit phr steht für "per hundred resin" und betrifft damit Gewichtsteile pro 100 Gewichtsteile Polymeres.

Vorzugsweise enthält eine erfindungsgemäße Polymerzusammensetzung als halogeniertes Polymeres zumindest anteilsweise PVC, wobei der PVC-Anteil insbesondere mindestens etwa 20, vorzugsweise mindestens etwa 50 Gew.-%, beispielsweise mindestens etwa 80 oder mindestens etwa 90 Gew.-% beträgt.

Die vorliegende Erfindung betrifft auch ein Verfahren zur Stabilisierung halogenhaltiger Polymerer, bei dem ein halogenhaltiges Polymeres oder ein Gemisch aus zwei oder mehr halogenhaltige Polymeren oder ein Gemisch aus einem oder mehreren halogenhaltige Polymeren und einem oder mehreren halogenfreien Polymeren mit einer erfindungsgemäßen Stabilisatorzusammensetzung vermischt wird.

Die Vermischung von Polymeren oder Polymeren und der erfindungsgemäße Stabilisatorzusammensetzung kann grundsätzlich zu jedem beliebigen Zeitpunkt vor oder während der Verarbeitung des Polymeren erfolgen. So kann die Stabilisatorzusammensetzung beispielsweise dem in Pulver- oder Granulatform vorliegenden Polymeren vor der Verarbeitung zugemischt werden. Es ist jedoch ebenso möglich, die Stabilisatorzusammensetzung dem Polymeren oder den Polymeren in erweichtem oder geschmolzenem Zustand, beispielsweise während der Verarbeitung in einem Extruder, als Emulsion oder als Dispersion, als pastöse Mischung oder als trockene Mischung zuzusetzen.

Eine erfindungsgemäße Polymerzusammensetzung kann auf bekannte Weise in eine gewünschte Form gebracht werden. Geeignete Verfahren sind beispielsweise Kalandrieren, Extrudieren, Spritzgießen, Sintern, Extrusions-Blasen oder das Plastisol-Verfahren. Eine erfindungsgemäße Polymerzusammensetzung kann beispielsweise auch zur Herstellung von Schaumstoffen verwendet werden. Grundsätzlich eignen sich die erfindungsgemäßen Polymerzusammensetzungen zur Herstellung von hart- oder weich-PVC, insbesondere zur Herstellung von PVC Schäumen.

Eine erfindungsgemäße Polymerzusammensetzung kann zu Formkörpern verarbeitet werden. Gegenstand der vorliegenden Erfindung sind daher auch Formkörper, mindestens enthaltend eine erfindungsgemäße Stabilisatorzusammensetzung oder eine erfindungsgemäße Polymerzusammensetzung.

Der Begriff "Formkörper" umfasst im Rahmen der vorliegenden Erfindung grundsätzlich alle dreidimensionalen Gebilde, die aus einer erfindungsgemäße Polymerzusammensetzung herstellbar sind. Der Begriff "Formkörper" umfasst im Rahmen der vorliegenden Erfindung beispielsweise Drahtummantelungen, Automobilbauteile, beispielsweise Automobilbauteile wie sie im Innenraum des Automobils, im Motorraum oder an den Außenflächen eingesetzt werden, Kabelisolierungen, Dekorationsfolien, Agrarfolien, Schläuche, Dichtungsprofile, Bürofolien, Hohlkörper (Flaschen), Verpackungsfolien (Tiefziehfolien), Blasfolien, Rohre, Schaumstoffe, Schwerprofile (Fensterrahmen), Lichtwandprofile, Bauprofile, Sidings, Fittings, Platten, Schaumplatten, Coextrudate mit recyceltem Kern oder Gehäuse für elektrische Apparaturen oder Maschinen, beispielsweise Computer oder Haushaltsgeräte.

Weitere Beispiele für aus einer erfindungsgemäßen Polymerzusammensetzung herstellbare Formkörper sind Kunstleder, Bodenbeläge, Textilbeschichtungen, Tapeten, Coil-Coatings oder Unterbodenschutz für Kraftfahrzeuge.

Ein weiterer Gegenstand der vorliegenden Erfindung ist die Verwendung eines Gemischs aus einem Trägermaterial der allgemeinen Formel CaₓAl₂(OH)₂₍ₓ₊₂₎HPO₃ · m H₂O, worin x für eine Zahl von 2-12 und m für eine Zahl von 0 bis 12 steht, und eines Salzes einer halogenhaltigen Oxysäure oder eines Gemischs aus zwei oder mehr solcher Salze, wobei mindestens ein Salz einer halogenhaltigen Oxysäure in fein verteilter Form auf dem Trägermaterial vorliegt, zur Stabilisierung halogenhaltiger Polymerer.

Die Erfindung wird nachfolgend durch Beispiele näher erläutert:

### Beispiele:

Drei unterschiedlich stabilisierte PVC-Proben (Rezepturen 1 bis 3) wurden jeweils auf ihre Zersetzungsgeschwindigkeit mittels dynamischen Stabilitätstest im Plasticorder überprüft. Der dynamische Stabilitätstest wurde bei 190 °C /60 g bei 30 Upm durchgeführt. Nach jeweils fünfminütigen Abständen wurde der Zustand der Verfärbung der drei PVC-Proben bestimmt. Außerdem wurde der Zeitpunkt bestimmt, ab dem die PVC-Proben jeweils vollständig zersetzt waren.

| **Bestandteile** | **Rezeptur 1** | **Rezeptur 2** | **Rezeptur 3** |
|---|---|---|---|
| | Referenz ohne Perchlorat | Referenz +Perchlorat | erfindungsgemäß |
| Vestolit M 5867 (PVC) | 100 | 100 | 100 |
| Tyrin 6000 (chloriertes Polyethylen) | 2 | 2 | 2 |
| Baerorapid 10 F (Polymethylmethacrylat) | 8 | 8 | 8 |
| Titanoxid | 4 | 4 | 4 |
| Azodicarbonamid | 4 | 4 | 4 |
| BS LSA (Epoxidiertes Sojabohnenöl) | 0,4 | 0,4 | 0,4 |
| BP R 9283 PLS/F/1 (Ca/Zn-Stabilisator) | 7,35 | 7,35 | 7,35 |
| CHAP | 0,8 | ---- | ---- |
| **Referenzstabilisator** (0,8 CHAP + 0,1 Perchlorat gemäß DE 10056880 A1) | ---- | 0,9 | ---- |
| Perchlorat geträgert auf CHAP gemäß vorliegender Patentanmeldung | ---- | ---- | 0,9 |

### Dynamischer Stabilitätstest

### Ergebnisse:

| Zersetzung der PVC-Proben pro Zeit (min) | **1** | **2** | **3** |
|---|---|---|---|
| 5 | 0 | 0 | 0 |
| 10 | 7 | 4 | 1 |
| 15 | 8 | 5 | 4 |
| 20 | 9 | 6,5 | 5,5 |
| 20,4 | zersetzt | | |
| 23,8 | | zersetzt | |
| 24,1 | | | zersetzt |

## Patentansprüche

1. Stabilisatorzusammensetzung für halogenhaltige Polymere, enthaltend ein Trägermaterial der allgemeinen Formel CaₓAl₂(OH)₂₍ₓ₊₂₎HPO₃· m H₂O, worin x für eine Zahl von 2-12 und m für eine Zahl von 0 bis 12 steht, und ein Salz einer halogenhaltigen Oxysäure oder ein Gemisch aus zwei oder mehr solcher Salze, wobei mindestens ein Salz einer halogenhaltigen Oxysäure in fein verteilter Form auf dem Trägermaterial vorliegt.

2. Stabilisatorzusammensetzung nach Anspruch 1, **dadurch gekennzeichnet, dass** höchstens 10 Gew.-% mindestens eines Salzes einer halogenhaltigen Oxysäure vom Trägermaterial durch mechanische Trennverfahren separierbar sind.

3. Stabilisatorzusammensetzung nach Anspruch 1 oder 2, **dadurch gekennzeichnet, dass** sie keine Kristallite mindestens eines Salzes einer halogenhaltigen Oxysäure mit einer Größe von mehr als 1 µm enthält.

4. Stabilisatorzusammensetzung nach einem der Ansprüche 1 bis 3, **dadurch gekennzeichnet, dass** sie mindestens ein anorganisches oder ein organisches Salz der Perchlorsäure enthält.

5. Stabilisatorzusammensetzung nach einem der Ansprüche 1 bis 4, **dadurch gekennzeichnet, dass** sie mindestens ein Treibmittel enthält.

6. Stabilisatorzusammensetzung nach einem der Ansprüche 1 bis 5, **dadurch gekennzeichnet, dass** sie mindestens eine Aminoverbindung enthält.

7. Stabilisatorzusammensetzung nach einem der Ansprüche 1 bis 6, **dadurch gekennzeichnet, dass** das Verhältnis von Salz oder Salzen einer halogenhaltigen Oxysäure zu Trägermaterial 1:100 bis 1:1 beträgt.

8. Stabilisatorzusammensetzung nach einem der Ansprüche 5 bis 7, **dadurch gekennzeichnet, dass** sie 10 bis 80 Gew.-%, bezogen auf das Gemisch aus Trägermaterial, halogenhaltiges Salz einer Oxysäure und Treibmittel, enthält.

9. Stabilisatorzusammensetzung nach Anspruch 1, herstellbar durch Vermischen eines Trägermaterials der allgemeinen Formel CaₓAl₂(OH)₂₍ₓ₊₂₎HPO₃· m H₂O, worin x für eine Zahl von 2 - 12 und m für eine Zahl von 0 bis 12 steht, und eines Salzes einer halogenhaltigen Oxysäure oder eines Gemischs aus zwei oder mehr solcher Salze, wobei beim Vermischen mindestens ein Salz einer halogenhaltigen Oxysäure in gelöster Form vorliegt und wobei beim Vermischen das Salz einer halogenhaltigen Oxysäure oder das Gemisch aus zwei oder mehr solcher Salze in einer Menge von 1 bis 50 Gew.-%, bezogen auf halogenhaltige Oxysäure und Trägermaterial, zugegeben wird und wobei Zusatzstoffe, sofern die Stabilisatorzusammensetzung noch einen oder mehrere enthalten soll, nach der Vermischung des Trägermaterials mit der Lösung des Salzes einer halogenhaltigen Oxysäure oder dem Gemisch aus zwei oder mehr solcher Salze zugegeben werden.

10. Stabilisatorzusammensetzung nach Ansprüche 1 bis 9, **dadurch gekennzeichnet, dass** sie einen oder mehrere Zusatztoffe enthält.

11. Verfahren zur Herstellung einer Stabilisatorzusammensetzung nach einem der Ansprüche 1 bis 10, bei dem ein Trägermaterial der allgemeinen Formel CaₓAl₂(OH)₂₍ₓ₊₂₎HPO₃· m H₂O, worin x für eine Zahl von 2-12 und m für eine Zahl von 0 bis 12 steht, und ein Salzes einer halogenhaltigen Oxysäure oder ein Gemisch aus zwei oder mehr solcher Salze, vermischt wird, wobei beim Vermischen mindestens ein Salz einer halogenhaltigen Oxysäure in gelöster Form vorliegt und wobei Zusatzstoffe, sofern die Stabilisatorzusammensetzung noch einen oder mehrere enthalten soll, nach der Vermischung des Trägermaterials mit der Lösung des Salzes einer halogenhaltigen Oxysäure oder dem Gemisch aus zwei oder mehr solcher Salze zugegeben werden.

12. Polymerzusammensetzung, enthaltend ein halogenhaltiges Polymeres oder ein Gemisch aus zwei oder mehr halogenhaltigen Polymeren und eine Stabilisatorzusammensetzung gemäß einem der Ansprüche 1 bis 10.

13. Verfahren zur Stabilisierung halogenhaltiger Polymerer, bei dem ein halogenhaltiges Polymeres oder ein Gemisch aus zwei oder mehr halogenhaltige Polymeren oder ein Gemisch aus einem oder mehreren halogenhaltige Polymeren und einem oder mehreren halogenfreien Polymeren mit einer Stabilisatorzusammensetzung gemäß einem der Ansprüche 1 bis 10 vermischt wird.

14. Verwendung eines Gemischs aus einem Trägermaterial der allgemeinen Formel Ca-ₓAl₂(OH)₂₍ₓ₊₂₎HPO₃ · m H₂O, worin x für eine Zahl von 2-12 und m für eine Zahl von 0 bis 12 steht, und eines Salzes einer halogenhaltigen Oxysäure oder eines Gemischs aus zwei oder mehr solcher Salze, wobei mindestens ein Salz einer halogenhaltigen Oxysäure in fein verteilter Form auf dem Trägermaterial vorliegt, zur Stabilisierung halogenhaltiger Polymerer.

## Claims

1. Stabiliser composition for halogen-containing polymers, comprising a carrier material of the general formula CaₓAl₂(OH)₂₍ₓ₊₂₎HPO₃ · m H₂O, wherein x is a number from 2 to 12 and m is a number from 0 to 12, and a salt of a halogen-containing oxy acid or a mixture of two or more such salts, at least one salt of a halogen-containing oxy acid being present in finely distributed form on the carrier material.

2. Stabiliser composition according to claim 1, **characterised in that** a maximum of 10 % by weight of at least one salt of a halogen-containing oxy acid is separable from the carrier material by mechanical separation methods.

3. Stabiliser composition according to claim 1 or 2, **characterised in that** it does not contain any crystallites of at least one salt of a halogen-containing oxy acid of a size of more than 1 µm.

4. Stabiliser composition according to any one of claims 1 to 3, **characterised in that** it comprises at least one inorganic or organic salt of perchloric acid.

5. Stabiliser composition according to any one of claims 1 to 4, **characterised in that** it comprises at least one blowing agent.

6. Stabiliser composition according to any one of claims 1 to 5, **characterised in that** it comprises at least one amino compound.

7. Stabiliser composition according to any one of claims 1 to 6, **characterised in that** the ratio of salt or salts of a halogen-containing oxy acid to carrier material is from 1:100 to 1:1.

8. Stabiliser composition according to any one of claims 5 to 7, **characterised in that** it contains from 10 to 80 % by weight, based on the mixture of carrier material, halogen-containing salt of an oxy acid and blowing agent.

9. Stabiliser composition, which can be prepared by mixing together a carrier material of the general formula CaₓAl₂(OH)₂₍ₓ₊₂₎HPO₃ · m H₂O, wherein x is a number from 2 to 12 and m is a number from 0 to 12, and a salt of a halogen-containing oxy acid or a mixture of two or more such salts, at least one salt of a halogen-containing oxy acid being present in dissolved form during mixing and the salt of a halogen-containing oxy acid or the mixture of two or more such salts being added, during mixing, in an amount of from 1 to 50 % by weight, based on the halogen-containing oxy acid and carrier material and additives being added, in case that the stabiliser composition shall comprise one or more, after mixing together the carrier material and a solution of the salt of a halogen-containing oxy acid or the mixture of two or more of such salts.

10. Stabiliser composition according to any one of claims 1 to 9, **characterised in that** it comprises one or more additives.

11. Process for the preparation of a stabiliser composition according to any one of claims 1 to 10, wherein a carrier material of the general formula CaₓAl₂(OH)₂₍ₓ₊₂₎HPO₃ · m H₂O, wherein x is a number from 2 to 12 and m is a number from 0 to 12, and a salt of a halogen-containing oxy acid or a mixture of two or more such salts are mixed together, at least one salt of a halogen-containing oxy acid being present in dissolved form during mixing and additives being added, in case that the stabiliser composition shall comprise one or more, after mixing together the carrier material and a solution of the salt of a halogen-containing oxy acid or the mixture of two or more of such salts.

12. Polymer composition, comprising a halogen-containing polymer or a mixture of two or more halogen-containing polymers and a stabiliser composition according to any one of claims 1 to 10.

13. Method of stabilising halogen-containing polymers, wherein a halogen-containing polymer or a mixture of two or more halogen-containing polymers or a mixture of one or more halogen-containing polymers and one or more halogen-free polymers is mixed with a stabiliser composition according to any one of claims 1 to 10.

14. Use of a mixture of a carrier material of the general formula CaₓAl₂(OH)₂₍ₓ₊₂₎HPO₃ · m H₂O, wherein x is a number from 2 to 12 and m is a number from 0 to 12, and a salt of a halogen-containing oxy acid or a mixture of two or more such salts, at least one salt of a halogen-containing oxy acid being present in finely distributed form on the carrier material, for the stabilisation of halogen-containing polymers.

## Revendications

1. Composition de stabilisation de polymères halogénés, comprenant un matériau de support répondant à la formule générale CaₓAl₂(OH)₂₍ₓ₊₂₎HPO₃• m H₂O, dans laquelle x représente un chiffre de 2-12 et m un chiffre de 0 à 12, ainsi qu'un sel d'un oxacide halogéné ou un mélange de deux de tels sels ou plus, au moins un sel d'un oxacide halogéné étant sous forme finement répartie sur le matériau de support.

2. Composition de stabilisation selon la revendication 1, **caractérisée en ce qu'**au maximum 10 % en poids d'au moins un sel d'un oxacide halogéné est séparable du matériau de support par procédé de séparation mécanique.

3. Composition de stabilisation selon la revendication 1 ou 2, **caractérisée en ce qu'**elle ne comprend pas de cristallites d'au moins un sel d'un oxacide halogéné d'une taille supérieure à 1 µm.

4. Composition de stabilisation selon l'une des revendications 1 à 3, **caractérisée en ce qu'**elle comprend au moins un sel inorganique ou organique d'acide perchlorique.

5. Composition de stabilisation selon l'une des revendications 1 à 4, **caractérisée en ce qu'**elle comprend au moins un agent propulseur.

6. Composition de stabilisation selon l'une des revendications 1 à 5, **caractérisée en ce qu'**elle comprend au moins un composé amino.

7. Composition de stabilisation selon l'une des revendications 1 à 6, **caractérisée en ce que** le rapport du sel ou des sels d'un oxacide halogéné au matériau de support est de 1:100 à 1:1.

8. Composition de stabilisation selon l'une des revendications 5 à 7, **caractérisée en ce qu'**elle comprend de 10 à 80 % en poids, rapporté au mélange constitué du matériau de support, de sel halogène d'un oxacide et d'agent propulseur.

9. Composition de stabilisation selon la revendication 1, réalisable par mélange d'un matériau de support répondant à la formule générale CaₓAl₂(OH)₂₍ₓ₊₂₎HPO₃ • m H₂O, dans laquelle x représente un chiffre de 2 - 12 et m un chiffre de 0 à 12, et d'un sel d'un oxacide halogéné ou d'un mélange de deux de tels sels ou plus, dans laquelle lors du mélange au moins un sel d'un oxacide halogéné est sous forme dissoute et, lors du mélange on ajoute le sel d'un oxacide halogéné, ou le mélange de deux de tels sels ou plus, en une quantité de 1 à 50 % en poids, rapportée à l'oxacide halogéné et au matériau de support, et on ajoute des additifs, si la composition de stabilisation doit en contenir un ou plusieurs, après le mélange du matériau de support avec la solution du sel d'un oxacide halogéné ou avec le mélange de deux de tels sels ou plus.

10. Composition de stabilisation selon l'une des revendications 1 à 9, **caractérisée en ce qu'**elle comprend un ou plusieurs additifs.

11. Procédé de préparation d'une composition de stabilisation selon l'une des revendications 1 à 10, dans lequel on mélange un matériau de support répondant à la formule générale CaₓAl₂(OH)₂₍ₓ₊₂₎HPO₃ • m H₂O, dans laquelle x représente un chiffre de 2-12 et m un chiffre de 0 à 12, ainsi qu'un sel d'un oxacide halogéné ou un mélange de deux de tels sels ou plus, et lors du mélange au moins un sel d'un oxacide halogéné est sous forme dissoute et on ajoute des additifs, si la composition de stabilisation doit en contenir un ou plusieurs, après le mélange du matériau de support avec la solution du sel d'un oxacide halogéné ou avec le mélange de deux de tels sels ou plus.

12. Composition polymère, contenant un polymère halogéné ou un mélange de deux polymères halogénés ou plus et une composition de stabilisation selon l'une des revendications 1 à 10.

13. Procédé de stabilisation de polymères halogénés, dans lequel un polymère halogéné ou un mélange de deux polymères halogénés ou plus ou un mélange comprenant un ou plusieurs polymères halogénés et un ou plusieurs polymères exempts d'halogène est mélangé avec une composition de stabilisation selon l'une des revendications 1 à 10.

14. Utilisation d'un mélange comprenant un matériau de support répondant à la formule générale CaₓAl₂(OH)₂₍ₓ₊₂₎HPO₃ • m H₂O, dans laquelle x représente un chiffre de 2-12 et m un chiffre de 0 à 12, ainsi qu'un sel d'un oxacide halogéné ou un mélange de deux de tels sels ou plus, au moins un sel d'un oxacide halogéné étant sous forme finement répartie sur le matériau de support, pour la stabilisation de polymères halogénés.
